# EUROPÄISCHE PATENTSCHRIFT

(11) **EP 4 318 423 B1**
(45) Veröffentlichungstag und Bekanntmachung des Hinweises auf die Patenterteilung: **30.10.2024**
(21) Anmeldenummer: 23212639.1
(22) Anmeldetag: 09.11.2021
(51) Int. Cl.: B06B 1/06, G06K 19/067, G01S 7/521, G01S 15/74

(54) **AKUSTISCHER TRANSPONDER, VERWENDUNG EINES AKUSTISCHEN TRANSPONDERS, VERFAHREN ZUR HERSTELLUNG EINES TRANSPONDERS UND AKUSTISCHES ÜBERTRAGUNGSSYSTEM**
ACOUSTIC TRANSPONDER, USE OF AN ACOUSTIC TRANSPONDER, METHOD FOR PRODUCING A TRANSPONDER AND ACOUSTIC TRANSMISSION SYSTEM
TRANSPONDEUR ACOUSTIQUE, UTILISATION D'UN TRANSPONDEUR ACOUSTIQUE, PROCÉDÉ DE FABRICATION D'UN TRANSPONDEUR ET SYSTÈME DE TRANSMISSION ACOUSTIQUE

(30) Priorität: 16.11.2020 DE 102020130172
(43) Veröffentlichungstag der Anmeldung: 07.02.2024
(62) Teilanmeldung aus: 21810322.4
(73) Patentinhaber: TDK Electronics AG, 81671 München (DE)
(72) Erfinder: Gebhart, Michael, 4020 Linz (AT)
(74) Vertreter: Epping - Hermann - Fischer

(56) Entgegenhaltungen:
- EP-A1- 1 752 916
- EP-A2- 1 691 426
- WO-A2-2011/073414
- DE-A1- 102005 043 039
- DE-A1- 102017 206 766
- DE-A1- 3 808 017
- DE-U1- 29 616 806
- RU-C2- 2 227 100

## Beschreibung

Die vorliegende Erfindung betrifft einen akustischen Transponder zur Informationsübertragung mittels einer akustischen Welle. Die Erfindung betrifft weiterhin die Verwendung eines akustischen Transponders sowie ein Verfahren zur Herstellung eines akustischen Transponders. Die vorliegende Erfindung betrifft weiterhin das dazugehörige Übertragungssystem, das mit akustischen Wellen arbeitet.

Es gibt die Anforderungen, Werkzeuge aus Metall, insbesondere in automatisierten Herstellungsverfahren, zu identifizieren. Dies kann genutzt werden, um den Hersteller, das Herstellungsdatum, die Zeit im Einsatz, die verwendbare Lebensdauer bzw. eventuell nötige Wartung (Schleifen, neu bestücken, etc.) für das individuelle Werkzeug zu kennen, und natürlich auch im Fall von Mängeln eine Zuordnung zu einem Hersteller, einer bestimmten Charge o.ä. zu ermöglichen. Insbesondere für neue Herstellungsverfahren im Bereich additive Verfahren (Drucken von Metallteilen) ist die Identifizierung ebenfalls ein wesentliches Thema, etwa beim Zusammensetzen mehrerer Druckteile.

Das Werkstück selbst kann mittels RFID (Radio-Frequency Identification - Identifizierung mit Hilfe elektromagnetischer Wellen) einer Fertigungsanlage nach Industrie 4.0 angeben, welche Prozesse in welcher Reihenfolge angewendet werden sollen.

Wenn dabei die Oberfläche des Werkstückes durch Bearbeitung verändert wird, sind an der Oberfläche angebrachte Mittel zur Identifikation hinderlich. Neben der Identifikation kann auch die Messung und Weiterleitung von Eigenschaften aus dem Inneren des Werkzeuges oder Druckstückes wesentlich sein, etwa der Temperatur, von mechanischen Kräften oder Vibrationen.

Ein spezielles Thema ist die Analyse des inneren Aufbaus, der Homogenität, eines entsprechenden Werkzeuges oder Druckteiles. Dies kann durch akustische Welle gemessen werden, welche an Fertigungsfehlern reflektiert werden. Die Einbettung eines solchen miniaturisierten Mess-Systems, zu dem nötige Betriebsleistung übertragen und eine bidirektionale Kommunikation besteht, ist ebenfalls ein möglicher Anwendungsfall der hier beschriebenen Technologie.

Es gibt mehrere Technologien zur Identifizierung, die prinzipiell verwendbar sind. Darunter optische Barcodes oder 2D Codes, welche z.B. auch im Relief an die Oberfläche aufgedruckt werden können, funkbasierte RFID Verfahren, oder auch eine gut dokumentierte Handhabung eines Werkzeuges.

Diese heute bekannten Verfahren haben alle ihre Nachteile.

Es ist schwer, Antennen für funkbasierte Verfahren direkt an Metall anzubringen, sie vollständig in Metall einzubetten ist für die Anwendung physikalisch nicht sinnvoll möglich, da elektrische und magnetische Felder praktisch vollständig vom Metall absorbiert werden (Faraday'scher Käfig). Die Verwendung von Ferriten zur Abschirmung, die Verwendung sogenannter Glastransponder, die in ein Sackloch im Werkzeug eingebettet werden können, ist technisch möglich, jedoch teuer und anfällig für weitere Probleme, etwa für mechanische Kräfte, die speziell im Werkzeug vorhanden sein werden.

Das Dokument RU 2 227 100 C2 beschreibt Mittel zur Verhinderung von Diebstählen und Diebstahl. Das System enthält eine Reihe von Transpondern und einen stationären Teil, der am zu schützenden Fahrzeug installiert ist und ein Logikmodul, eine Benutzerwarneinheit, ein Wegfahrsperrenrelaiselement, ein Transponderlesegerät, eine Speichereinheit für individuelle Serviceeinstellungen und einen Signalwandler für den Einstellungszustand.

Das Dokument EP 1 752 916 A1 beschreibt einen Transponder bestehend aus einem Transponderelement und einer Drahtantenne, die in ein elektrisch nicht leitendes dielektrisches Material eingebettet ist.

Das Dokument DE 10 2005 043039 A1 beschreibt eine Vorrichtung umfassend mindestens ein piezoakustisches Resonatorelement mit mindestens einer piezoelektrischen Schicht und zwei an der piezoelektrischen Schicht anliegenden Elektroden, wobei das piezoakustische Resonatorelement derart beschaffen ist, dass durch Anlegen einer Spannung mittels der Elektroden an die piezoelektrische Schicht eine Volumenschwingung der piezoelektrischen Schicht mit Resonanzfrequenz angeregt wird.

Das Dokument EP 1 691 426 A2 beschreibt piezoelektrische Wandler mit Resonanzelementen zur Umwandlung einer akustischen Schwingung in eine elektrische Ausgangsspannung. Die Wandler sind auf einer mikrobearbeiteten Siliziumvorrichtung angeordnet.

Das Dokument WO 2011/073414 A2 beschreibt ein schwingfähiges System für einen Ultraschallwandler. Das System weist eine Membran auf, die von einem Sockel getragen wird. Zudem weist das System ein piezoelektrisches Element auf, das mittels eines elektrisch leitfähigen Haftmittels an der Membran befestigt ist.

Das Dokument DE 296 16 806 U1 beschreibt einen elektroakustischer Wandler mit einer Basis aus einem Wandlerträgermaterial zur Verwendung als Träger für eine Anordnung aktiver Elemente.

Das Dokument DE 38 08 017 A1 beschreibt einen Ultraschallwandler aufweisend einen metallischen Draht, der über einen Teil seiner Länge mit einer piezokeramischen Schicht versehen ist und gleichzeitig als Innenelektrode dient.

Das Dokument DE 10 2017 206766 A1 beschreibt einen MEMS-Wandler zum Interagieren mit einem Volumenstrom eines Fluids umfassend ein Substrat, das einen Schichtstapel mit einer Mehrzahl von Schichten aufweist, die eine Mehrzahl von Substratebenen bilden, und das eine Kavität in dem Schichtstapel aufweist. Der MEMS-Wandler umfasst einen elektromechanischen Wandler, der mit dem Substrat in der Kavität verbunden ist und ein sich in zumindest einer Bewegungsebene der Mehrzahl von Substratebenen verformbares Element aufweist, wobei eine Verformung des verformbaren Elements in der Bewegungsebene und der Volumenstrom des Fluids kausal zusammenhängen. Einige Referenzen für Firmen mit RFID-Produkten, die sich diesem Thema widmen, sind:
https://www.balluff.com/en/de/industries-andsolutions/solutions-and-technologies/tool-id/ https://www.turck.de/en/tool-identification-480.php https://www.harting.com/UK/en-gb/markets/automatic-toolidentification
https://rfid-europe.com/product/anlagen-und-logistik-tagconfidex-ironside-micro/
https://www.nfcwebshop.at/glass-tag-sokymat-hf-high-frequency-transponder.html
https://www.zoller.info/at/produkte/toolmanagement/datentrans fer/zidcode?r=1
https://www.iis.fraunhofer.de/de/ff/lv/net/projekte/rfid_meta ll.html
https://www.harting.com/DE/de/rfid
https://www.innovating-automation.blog/tool-identificationin-metalworking-2/

Alternative ID-Technologien, wie beispielsweise Aufschriften, Aufkleber, optische Codes auch im Relief sind auch an der Oberfläche des Werkzeugs angeordnet und dort ebenfalls dem Risiko ausgesetzt, abgerieben, verschmutzt und unleserlich zu werden.

Aufgabe der vorliegenden Erfindung ist es einen akustischen Transponder, die Verwendung eines akustischen Transponders, ein Verfahren zur Herstellung eines akustischen Transponders sowie ein akustisches Übertragungssystem zu beschreiben, welche die oben stehenden Probleme lösen.

Diese Aufgabe wird durch einen akustischen Transponder, die Verwendung eines miniaturisierten Transponders, ein Verfahren zur Herstellung eines miniaturisierten Transponders und ein akustisches Übertragungssystem gemäß der unabhängigen Ansprüche gelöst.

Gemäß einem Aspekt wird ein akustischer Transponder beschrieben. Der akustische Transponder ist dazu ausgebildet eine Informationsübertragung mittels einer akustischen Welle zu ermöglichen. Der akustische Transponder ist zur Integration in ein akustisches Übertragungssystem ausgebildet. Der akustische Transponder zeichnet sich dadurch aus, dass eine Informationsverarbeitung, etwa im Sinne des Empfangs eines Kommandos und einer Antwort mit einer Identifikationsnummer Nummer, vollständig in einem Siliziumchip erfolgt, und nicht etwa durch Reflektoren für akustische Oberflächenwellen (SAW ("Surface Acoustic Wave" - akustische Oberflächenwelle) Transponder) erzeugt wird.

Der akustische Transponder ist zur Identifikation eines Objekts (beispielsweise eines metallischen Bauteils und/oder ein 3D Druckteils), zum Steuern eines Objekts und/oder zu Messungen in einem Inneren des Objekts ausgebildet. Der akustische Transponder ist zur Erfassung von Messdaten, beispielsweise von einer Oberfläche (Innenfläche oder Außenfläche) des Objekts und/oder aus einem Inneren des Objekts, ausgebildet. Der akustische Transponder ist zur Schaffung eines Kommunikationskanals zur Übertragung von Information und Energie mittels einer Materialwelle, insbesondere durch eine Metalloberfläche hindurch, ausgebildet. Der akustische Transponder ist zum Einsatz in einem erweiterten Temperaturbereich, vorzugsweise von -40°C bis +105 °C, ausgebildet.

Der akustische Transponder weist wenigstens einen, bevorzugt genau einen, Transponderchip auf. Der Transponderchip ist ein Siliziumchip. Der Transponderchip weist einen integrierten Schaltkreis (IC - Integrated Circuit) auf. Der IC ist bevorzugt in der Bauform "Bare Die" (d.h. ohne Gehäuse) ausgebildet.

Der akustische Transponder weist ferner ein piezoelektrisches Element auf. Das piezoelektrische Element ist zur Umwandlung eines elektrischen Spannungssignals, beispielsweise einer Trägerfrequenz, in eine akustische Welle derselben Signalform ausgebildet und angeordnet. Das piezoelektrische Element ist ein elektroakustischer Wandler. Das piezoelektrische Element dient als Substrat des akustischen Transponders.

Das piezoelektrische Element weist vorzugsweise bleifreies Material auf. Besonders bevorzugt besteht das piezoelektrische Element aus bleifreiem Material. Damit ist der akustische Transponder RoHS-konform ausgebildet (RoHS steht hierbei für "Restriction of (the use of certain) Hazardous Substances in electrical and electronic Equipment" - Beschränkung der Verwendung bestimmter gefährlicher Stoffe in Elektro- und Elektronikgeräten). Alternativ dazu kann das piezoelektrische Element beispielweise PZT (Blei-Zirkonat-Titanat) aufweisen.

Das piezoelektrische Element ist scheibenförmig ausgebildet. Insbesondere ist eine Höhe oder Schichtdicke des piezoelektrischen Elements geringer als eine Breite bzw. ein Durchmesser des piezoelektrischen Elements. Alternativ dazu kann das piezoelektrische Element aber auch rechteckig ausgebildet sein. Dies ist besonders zweckmäßig, wenn der Transponder an eine gekrümmte Oberfläche, beispielsweise eine Rohrwand, gekoppelt werden soll. Der akustische Transponder kann entsprechend scheibenförmig (zylindrisch) oder rechteckig ausgebildet sein. Das piezoelektrische Element weist aufgrund seiner Geometrie und seiner Materialeigenschaften Resonanzen auf.

Der akustische Transponder weist eine miniaturisierte Bauform auf. Mit anderen Worten der akustische Transponder weist eine geringe Bauhöhe und/oder ein kleines Volumen auf. Insbesondere weist der akustische Transponder eine kleinere bzw. kompaktere Ausführung auf als herkömmliche Transponder für ein akustisches Übertragungssystem. Beispielsweise weist der Transponder eine Höhe von < 3 mm, beispielsweise ≤ 1 mm oder ≤ 500 µm, auf. Das piezoelektrische Element weist eine Höhe ≤ 300 µm, bevorzugt ≤ 200 µm, auf.

Durch die miniaturisierte Bauform ist der akustische Transponder äußerst flexibel einsetzbar und kann, beispielsweise vollständig, in ein Objekt eingebettet werden. Alternativ zu der Integration in ein Objekt kann der Transponder besonders einfach an einer Oberfläche eines Objekts, beispielsweise an einer Außenfläche oder an einer Innenfläche, angepasst werden. Der akustische Transponder kann ferner besonders gut an die Eigenschaften vorhandener Systeme, zum Beispiel Kontaktlos-Karten oder NFC (Near Field Communication - Nahfeldkommunikation) Technologie angepasst werden.

Eine zu übertragende Information, welche in der mechanischen Vibrationsschwingung enthalten ist, ist dabei am Übertragungskanal nicht den gleichen Störungen durch elektromagnetische Felder benachbarter Systeme ausgesetzt ist, wie dies bei der Verwendung funkbasierter Verfahren der Fall ist. Das akustische Identifikationsverfahren mittels des akustischen Transponders kann daher auch in Gegenwart starker elektromagnetischer Felder eingesetzt werden.

Ferner sind auch nicht die gleichen Zulassungsverfahren und der damit verbundene Aufwand bzw. die Kosten für den Einsatz oder das in Verkehr bringen des akustischen Transponders nötig, da der Transponder auf dem Einsatz einer akustischen Welle, und nicht einer elektromagnetischen Welle basiert.

Gemäß einem Ausführungsbeispiel ist der Transponder dazu ausgebildet vollständig in ein Objekt oder Werkstück eingebettet zu werden. Das Werkstück kann ein (vorzugsweise metallisches) Bauteil und/oder ein 3D Druckteil sein. Das Werkstück kann ein Metallwerkzeug sein.

Durch die miniaturisierte Bauform kann der Transponder vollständig in das Werkstück eingebettet werden. Insbesondere kann die Oberfläche des Werkstücks vollständig geschlossen sein, um den akustischen Transponder zur Identifikation im Inneren tragen. Die gesamte Oberfläche des Werkstücks kann damit bearbeitet werden, ohne die Identifikation des Werkstücks zu beeinträchtigen.

Die geringe Bauhöhe und das kleine Volumen des akustischen Transponders führen lediglich zu einer geringen bzw. vernachlässigbaren Schwächung des Werkstücks (z.B. aus Metall), in welches der Transponder eingebettet ist. Ferner ist es möglich den Transponder auch noch in kleine Metallstücke einzubetten. Durch die kompakte Ausführung des Transponders entsteht durch dessen Einbettung keine Oberflächenstruktur und/oder es verleibt kein Loch im Metall wie beispielsweise bei Glastranspondern. Es kommt insbesondere zu keinem von außen erkennbaren Defekt, und es liegt auch keine äußerlich leicht erkennbare Identifikation des getaggten Objekts vor.

Gemäß einem Ausführungsbeispiel ist der Transponder dazu ausgebildet akustisch an einer Oberfläche eines Werkstücks angebunden zu werden. Das Werkstück bzw. Objekt weist vorzugsweise Metall auf. Das Werkstück kann eine Metallplatte oder ein Metallrohr aufweisen. Der Transponder kann dabei lösbar (z.B. magnetisch) oder unlösbar (z.B. mit Hilfe einer dünnen Klebeschicht) an der Metalloberfläche befestigt sein. Der Transponder kann an einer Innenfläche oder an einer Außenfläche des Werkstücks befestigt sein.

Um einen guten akustischen Kontakt zwischen dem Transponder und dem akustischen Kanal, also der metallischen Oberfläche des Werkstücks, zu erreichen, kann auf der Unterseite des Transponders eine Beschichtung mit einer dünnen elastischen Schicht vorgesehen sein. Mit der Unterseite des Transponders ist in diesem Zusammenhang diejenige Außenfläche des Transponders gemeint, welche im verbauten Zustand dem Werkstück zugewandt ist.

Die Beschichtung hat den Zweck, die sich aufgrund von Oberflächenrauigkeit der gegenüberliegenden Metallflächen (metallische Oberfläche des Werkstücks sowie (metallische) Unterseite des Transponders) bildenden Hohlräume weitgehend mit einem Medium auszufüllen, welches deutlich höhere akustische Impedanz aufweist, als Luft. Die Effizienz der akustischen Kopplung kann dadurch wesentlich erhöht werden.

Gemäß einem Ausführungsbeispiel ist der Transponderchip mittels Flip-Chip Technologie auf das piezoelektrische Element aufgebracht.

Durch die "Direct Chip Attach" bzw. "Flip-Chip" Technologie zur Anbindung zwischen Transponderchip und piezoelektrischem Element kann die Bauweise des Transponders äußerst kompakt gehalten werden. Eine Fläche des Transponders kann beispielsweise der Fläche des Bare Die des integrierten Schaltkreises / Transponderchips entsprechen.

Mit üblicher Strukturgröße der Chipfertigung von 180 nm und je nach Speichergröße und Leistungsfähigkeit hat ein entsprechender Silizium Die eine Fläche von ca. 0,4 - 4 mm² und eine Dicke von maximal ca. 170 µm. Der Transponderchip kann ferner mit sogenannten Anschlusselementen (beispielsweise Bumps) ausgeführt sein, welche eine Erhöhung an einer Oberfläche bilden und einen Kontaktanschluss zum piezoelektrischen Element darstellen.

Insgesamt ergibt sich eine sehr geringe Höhe von zusammen beispielsweise ca. 500 µm (ca. 170 µm Höhe des Transponderchips als Bare Die + ca. 300 µm Höhe des piezoelektrischen Elements als PCB (Printed Circuit Board - bedruckte Leiterplatte) + Höhe einer Schutzhülle bzw. Oberflächenpassivierung) .

Gemäß einem Ausführungsbeispiel ist zwischen dem Transponderchip und dem piezoelektrischen Element eine Leiterplatte angeordnet. Die Leiterplatte stellt eine elektrische Verbindung zwischen dem piezoelektrischen Element und dem Transponderchip her. In diesem Fall ist der Transponderchip vorzugsweise als gepackter IC an Stelle eines Bare Die ausgeführt.

Eine Fläche des Transponders bzw. des piezoelektrischen Elements kann beispielsweise der Fläche der Leiterplatte entsprechen. Eine Höhe der Leiterplatte ist so ausgeführt, dass die Gesamthöhe des Transponders nicht übermäßig vergrößert wird. Insbesondere ist die Leiterplatte möglichst dünn ausgeführt.

Insgesamt ergibt sich eine geringe Höhe von zusammen maximal ca. 3 mm.

Die Leiterplatte kann an einer Unterseite Relief-Strukturen aufweisen. In diesem Fall kann ein Kontaktbereich zwischen Leiterplatte und piezoelektrischem Element erheblich reduziert werden, so dass nur ein geringer Prozentsatz der Fläche der Leiterplatte Kontakt mit dem piezoelektrischen Element hat.

Durch die Leiterplatte können zusätzliche elektrische Komponenten, wie beispielsweise ein Anpassnetzwerk und/oder Sensoren auf einfache Weise mit dem piezoelektrischen Element verbunden werden, ohne das hierfür weitere Verbindungsmittel bzw. Prozessschritte zur Verbindung erforderlich sind. Damit wird ein besonders vielseitiger und flexibel einsetzbarer Transponder zur Verfügung gestellt.

Gemäß einem Ausführungsbeispiel ist der Transponderchip ein NFC (Near Field Communication - Nahfeldkommunikation) Chip.

Der Transponderchip entspricht vorzugsweise den Standards zur Verwendung im 13,56 MHz ISM Frequenzbereich (Proximity oder Vicinity Chip, auch unter dem Begriff NFC Chips zusammengefasst). Ein NFC Chip bezieht seinen Systemtakt über die Trägerfrequenz vom Reader, und kann auch in einer anderen Frequenz arbeiten, beispielsweise von 9 - 14 MHz. So ist eine optimale Anpassung an die Eigenschaften des akustischen Kanals möglich. Insgesamt wird damit ein besonders flexibler akustischer Transponder zur Verfügung gestellt.

Gemäß einem Ausführungsbeispiel ist eine Höhe bzw. Schichtdicke des piezoelektrischen Materials derart eingestellt, dass sich eine Dickenresonanz, also ein Einbruch in der Schalldämmung, im Bereich von 9 MHz bis 14 MHz ausbildet. Mit anderen Worten, eine Höhe des piezoelektrischen Materials ist derart ausgewählt, dass der Transponder in dem Frequenzbereich von 9 MHz bis 14 MHz optimal einsetzbar ist.

Auf diese Weise erhält der akustische Kanal durch das Objekt ein "Fenster geringer Dämpfung", das zur Energie- und Datenübertragung vorteilhaft genutzt werden kann. Die Schichtdicke bzw. Höhe des piezoelektrischen Materials ist vorzugsweise < 300 µm, bevorzugt ≤ 200 µm.

Gemäß einem Ausführungsbeispiel weist der akustische Transponder wenigstens zwei Elektroden auf. Die Elektroden sind wenigstens an einer Unterseite (untere Elektrode) und an einer Oberseite (obere Elektrode) des piezoelektrischen Elements ausgebildet. Vorzugsweise ist elektrisch leitfähiges Material (Elektrodenmaterial) auch an wenigstens einer Seitenfläche des piezoelektrischen Elements ausgebildet. Dadurch kann die Elektrode von der Unterseite über die Seitenfläche bis zur Oberseite des piezoelektrischen Elements geführt werden. Eine Kontaktierung beider Elektroden von der Oberseite her ist somit möglich.

Die Elektroden bzw. das leitfähige Material weisen vorzugsweise Silber, insbesondere eine Silberlötpaste, auf. Bevorzugt sind die Elektroden bzw. das leitfähige Material zumindest teilweise elastisch ausgebildet. Insbesondere weisen die Elektroden eine größere Elastizität auf als die Anschlusselemente des Transponderchips.

Durch die elastische Ausgestaltung können Beschädigungen der Elektroden während einer Herstellung des Transponders, insbesondere während der Flip-Chip Montage des Transponderchips auf das piezoelektrische Element, verhindert werden.

Eine Form der leitfähigen Elektroden ist ferner so ausgestaltet, dass die Anschlusselemente (Bumps und/oder Bonddrähte) des Transponderchips das piezoelektrische Element (und gegebenenfalls ein Anpassnetzwerk, z.B. einen Induktor) richtig kontaktieren. Bevorzugt sind die Elektroden so ausgebildet, dass ferner zwischen dem Transponderchip und dem piezoelektrischen Element angeordnete mögliche weitere Komponenten (z.B. ein Zwischenelement und/oder eine Leiterplatte) einfach und effektiv kontaktiert werden können.

Vorzugsweise sind die Elektroden strukturiert ausgebildet. Insbesondere ist die Elektrode an der Oberseite des piezoelektrischen Elements (obere Elektrode) strukturiert ausgebildet. Die obere Elektrode kann in Form eines Layouts strukturiert sein, um eine Mehrzahl von parallelen Anschlussflächen beispielsweise für einen Induktor, den Transponderchip und/oder weitere Komponenten bereitzustellen.

Das Strukturieren der oberen Elektrode kann bereits vor dem Vorgang des Polens des piezoelektrischen Elements erfolgen. Auf diese Weise können Teile der Fläche des piezoelektrischen Elements später im Betrieb frei von elektrisch angeregter Dickenschwingung gehalten werden. Folglich kann das piezoelektrische Element durch gezielte Strukturierung der oberen Elektrode in Bereiche unterteilt werden, die entweder stärker eine resonante Dickenschwingung aufweisen, oder ungepolt und daher ruhig / nicht vibrierend bleiben.

Eine (parallele) Kapazität des piezoelektrischen Elements lässt sich ebenfalls über die Form der Elektroden (und die dielektrischen Eigenschaften des piezoelektrischen Materials, beispielsweise PZT) einstellen.

Gemäß einem Ausführungsbeispiel ist eine elektrische Impedanz zwischen dem piezoelektrischen Element und dem Transponderchip durch eine Bauform des piezoelektrischen Elements und/oder der Elektroden eingestellt.

Das piezoelektrische Element stellt durch seine gegenüberliegenden Elektroden und der Dielektrizität des piezoelektrischen Materials dazwischen einen Kondensator dar. Für ein bestimmtes Piezoelement ergibt sich damit bei einer bestimmten Frequenz eine Anschlussimpedanz. Diese wird umso niedriger, je größer die Kapazität ist. Um ein Anpassnetzwerk aus diskreten Bauteilen zu vermeiden, kann beispielsweise durch geeignete Dimensionierung der Elektroden eine gut passende Anschlussimpedanz erreicht werden. Insbesondere werden ein Material und/oder die Höhe des piezoelektrischen Elements und/oder ein Material und/oder eine Größe und/oder eine Strukturierung der Elektroden derart ausgewählt, dass die Impedanz optimal eingestellt ist.

Gemäß einem Ausführungsbeispiel weist der akustische Transponder ferner wenigstes ein Element zur elektrischen Impedanzanpassung auf. Beispielsweise kann der Transponder einen Induktor aufweisen. In diesem Fall stellt der Induktor ein diskretes separates Bauteil zur Anpassung der Impedanz (Anpassnetzwerk) dar. Der Induktor kann als SMD (Surface Mounted Device - oberflächenmontierbares) Bauteil ausgebildet sein. Der Induktor kann eine drahtgewickelte Bauform oder eine keramische Multilayer-Bauform aufweisen. Der Induktor kann mittels Reflow-Löten elektrisch mit dem piezoelektrischen Element verbunden sein. Alternativ dazu kann der Induktor auch durch leitfähiges Kleben mit dem piezoelektrischen Element verbunden sein.

Der Induktor wird parallel zur Kapazität des piezoelektrischen Elements verwendet. Vorzugsweise ist der Induktor so dimensioniert, dass der Imaginärteil der Impedanz an der Betriebsfrequenz (weitgehend) kompensiert wird, wie das bei Resonanzkreisen geschieht.

Gemäß einem Ausführungsbeispiel ist der Induktor als eine erste planare Spule ausgebildet. Mit anderen Worten, der Induktor kann als flächiges Element ausgebildet sein. Beispielsweise entspricht eine Fläche des Induktors der Fläche des piezoelektrischen Elements. In diesem Fall kann der Transponder einen zusätzlichen Schichtaufbau aufweisen. Insbesondere kann zwischen dem Induktor und der Elektrode an der Oberseite des piezoelektrischen Elements eine isolierende Schicht ausgebildet sein. Die isolierende Schicht kann eine Ferritschicht aufweisen.

Eine planare Spule wird in konventioneller NFC Technologie als Schleifenantenne genutzt. Die erste planare Spule wirkt als Emitter eines H-Wechselfeldes. Folglich entsteht mit diesem Aufbau, in welchem der Transponderchip entfallen kann, ein transparenter Wandler zwischen H-Wechselfeld und akustischer Welle.

Der Wandler kann auf eine ebene glatte Metallfläche aufgeklebt werden. Der Wandler kann in diesem Fall NFC Kommunikation vom H-Wechselfeld in Luft umsetzen auf eine Materialwelle. Ein gleichartiges, gegenüberliegend an der Metallfläche aufgeklebtes Bauteil würde von der Materialwelle in H-Wechselfeld umsetzen (passiver Repeater für NFC Signale durch Metall).

Durch die Kombination von dickenschwingendem piezoelektrischem Element und Schleifenantenne in übereinanderliegenden Schichten ist der Transponder folglich als transparenter, resonanter Wandler zwischen akustischer Welle und H-Wechselfeld ausgebildet. Die Anwendung bevorzugt an Metalloberflächen wird erleichtert durch die Verwendung einer Ferritschicht, welche gleichzeitig elektrisch isolierend wirkt. Auch die Schicht zur Ankopplung des piezoelektrischen Elements an die Metalloberfläche, beispielsweise eine dünne Epoxidharz-Klebeschicht, hat ihren Anteil an der Transmissionscharakteristik des akustischen Kanals.

Die Materialgeometrie schwingt normalerweise in bestimmten Moden mit. Eine Metallplatte zum Beispiel zeigt schmalbandige Resonanzen bei Vielfachen der akustischen Wellenlänge im Material und starke Dämpfungen dazwischen. Dies erscheint als ein Resonanzkamm. Aber auch das Piezoelement weist aufgrund seiner oben beschriebenen Geometrie und seinen Materialeigenschaften Resonanzen auf.

Aufgrund der oben beschriebenen elastischen Materialeigenschaften, vor allem der Klebeschicht, lässt sich durch eine Überlagerung dieser Moden ein akustischer Übertragungskanal mit einem relativ flachen Durchlassbereich bilden. In diesem Durchlassbereich fehlen die starken Dämpfungen des Resonanzkamms. Ein solcher Kanal kann für die Datenübertragung nach dem NFC-Schema genutzt werden. Ein derartiger flacher Durchlassbereich kann bei Frequenzen größer als 10 MHz liegen, beispielsweise in einem Bereich größer als 10,5 MHz. Beispielsweise liegt der Bereich um 11 MHz.

Die Abhängigkeit dieses Kanals von der Temperatur und von der Dicke eines homogenen Metallmaterials ist sehr gering, da die einzelnen Spitzen und Kerben des Resonanzkamms im gut durchlässigen Kommunikationsfenster nicht so deutlich ausgeprägt sind, wie außerhalb dieses Bereiches.

Der transparente, resonante Wandler kann ferner eine induktiv gekoppelte zweite planare Spule aufweisen. Die zweite planare Spule ist an einer Unterseite des piezoelektrischen Elements ausgebildet. Die zweite planare Spule weist eine größere Fläche auf als die erste planare Spule. Die zweite planare Spule kann zur magnetischen Isolierung auf einer Ferritfolie angeordnet sein. Die Ferritfolie befindet sich folglich zwischen der unteren Elektrode und der zweiten planaren Spule.

Die erste planare Spule lässt sich durch Kopplung mit der zweiten planaren Spule zu einer größeren Antenne im üblichen Format von ID-Karten (ID1 nach ISO/IEC7810 bzw. Antennenklasse 1 - 6 nach ISO/IEC14443) erweitern. Die Wirkfläche der planaren Spule kann damit effektiv an gängige Formate, beispielsweise an das ID-1 Kartenformat und an Antennengrößen der NFC Schnittstellen, angepasst werden. Damit wird ein besonders anpassungsfähiger und flexibel einsetzbarer Wandler bereitgestellt.

Gemäß einem Ausführungsbeispiel weist der akustische Transponder wenigstens eine Identifikationsnummer und/oder wenigstens einen Sensor, vorzugsweise einen MEMS (Micro Electromechanical System - mikroelektromechanisches System) Sensor auf.

Die Identifikationsnummer dient der sicheren Authentifizierung mit akustischem Link. Die Miniaturisierung des akustischen Transponders kann ferner zu einer Positionsbestimmung, zugleich mit Identifikation und/oder Authentifizierung genutzt werden. Insbesondere kann die miniaturisierte Bauform des Transponders optimal dazu eingesetzt werden, um eine relativ genaue Position des Transponders zu bestimmen. Dies erleichtert das Auslesen des Transponders bzw. die Identifikation des Werkstücks, in welches der Transponder eingebettet ist. Damit wird ein besonders effizienter akustischer Transponder bereitgestellt.

Der Sensor kann ein Temperatursensor, Drucksensor, Feuchtigkeitssensor, Gassensor, Lichtsensor, Impulszähler, Mikrofon und/oder ein Sensor von einem ähnlichen Typ sein.

Insbesondere MEMS Sensoren sind kostengünstig in großer Anzahl herzustellen, weisen gute elektrische Eigenschaften und ein gutes Signal-zu-Noise Verhältnis auf und haben einen geringen Energieverbrauch. Dadurch kann ein effizienter und vielseitig einsetzbarer Transponder bereitgestellt werden.

Gemäß einem Ausführungsbeispiel kann der miniaturisierte akustische Transponder in der Funktion mit sicherer Authentifizierung als Eingabeelement genutzt werden. Die Authentifizierung erlaubt hier zunächst den Zugang zur Eingabe von Information. Die ermittelte Position erlaubt beispielsweise ein Display auf Metall zu bedienen. Zu diesem Zweck kann ein Eingabeelement / Display an einer Oberfläche des Werkstücks, in welches der Transponder eingebracht und/oder an welcher der Transponder angekoppelt ist, aufgebracht (beispielsweise aufgeklebt) sein. Damit wird ein besonders flexibel einsetzbarer Transponder bereitgestellt.

Gemäß einem Ausführungsbeispiel weist der Transponder wenigstens ein Schutzelement auf. Das Schutzelement ist dazu ausgebildet und angeordnet den akustischen Transponder vor externen Einflüssen zu schützen. Das wenigstens eine Schutzelement weist vorzugsweise eine Vergussmasse (Mold) auf. Die Vergussmasse umhüllt eine Oberseite des Transponders vollständig. Die Vergussmasse kann ebenso Teile der Seitenfläche des Transponders umhüllen.

Die Vergussmasse kann transparent sein, um es zu ermöglichen, dass der Transponder Licht abgibt. Die Vergussmasse kann alternativ dazu opak sein, um eine Beeinflussung der Funktion des Transponders durch Licht zu verhindern. Die Vergussmasse kann ferner magnetisierbare Partikel enthalten.

Um zu verhindern, dass die Vergussmasse einen großen Anteil der Fläche des piezoelektrischen Elements bedeckt, können schwer benetzbare Strukturen / Kugeln als untere Lage zwischen der Vergussmasse und dem piezoelektrischen Element verwendet werden. Auch die oben erwähnte Leiterplatte zwischen Transponderchip und piezoelektrischem Element kann ein Benetzen des piezoelektrischen Elements mit der Vergussmasse verhindern.

Das wenigstens eine Schutzelement kann ferner eine Umrandung aufweisen. Die Umrandung erstreckt sich entlang eines Umfangs des Transponders. Die Umrandung bildet eine Art Kragen um eine Seitenfläche des Transponders. Die Umrandung vergrößert die Höhe des Transponders. Anders ausgedrückt, ist eine Höhe der Umrandung größer als eine Höhe des Transponders vor dem Anordnen der Umrandung.

Ein Volumen in einem Innenbereich der Umrandung ist mit der Vergussmasse aufgefüllt. Die Umrandung bildet folglich ein Reservoir bzw. begrenztes Volumen für die Vergussmasse. Ferner schützt die Umrandung die Seitenfläche des Transponders vor externen Einflüssen.

Das wenigstens eine Schutzelement kann ferner eine Membran aufweisen. Die Membran ist an einer Unterseite des Transponders ausgebildet. Die Membran kann sich zusätzlich aber auch zumindest teilweise über die Seitenfläche des Transponders erstrecken. Die Membran schützt die Unterseite des Transponders vor externen Einflüssen. Die Membran kann Stahl aufweisen. Die Membran kann eine größere Fläche aufweisen als das piezoelektrische Element. Ein unteres Ende der Umrandung kann auf der Membran aufsetzen. Damit können Umrandung und Membran eine Art Hülse des Transponders bilden.

Die Membran kann magnetisch ausgebildet sein. Ferner kann auch die Umrandung magnetisch ausgebildet sein. In einem akustischen Übertragungssystem, welches ein magnetisches Gegenstück auf der Primärseite aufweist, können der Transponder und das Gegenstück somit aufeinander ausgerichtet und/oder miteinander befestigt werden.

Gemäß einem Ausführungsbeispiel weist der Transponder ferner ein Zwischenelement (Interposer) auf. Das Zwischenelement ist zwischen dem piezoelektrischen Element und dem Transponderchip ausgebildet.

Das Zwischenelement kann eine metallisierte Oberfläche aufweisen zur Herstellung einer elektrischen Verbindung mit dem piezoelektrischen Element und/oder dem Transponderchip und/oder weiteren Komponenten des Transponders, beispielsweise dem Induktor.

Vorzugsweise ist die metallisierte Oberfläche des Zwischenelements zumindest teilweise strukturiert. Insbesondere kann eine dem piezoelektrischen Element zugewandte Unterseite des Zwischenelements eine Struktur aufweisen zur Bereitstellung einer Mehrzahl von parallelen, elektrischen Kontakten und/oder zur Minimierung einer Kontaktfläche zwischen dem Zwischenelement und dem piezoelektrischen Element. Dadurch wird die elektrische Verbindungssicherheit verbessert.

Beispielsweise können kurze zylindrische Säulen aus der Unterseite des Zwischenelements herausragen. Alternativ kann die Unterseite eine Struktur der Wände von Bienenwaben, d.h. Vielecke, aufweisen. Auf diese Weise ist es möglich, dass das Zwischenelement nur einen kleinen Anteil der Fläche des piezoelektrischen Elements mechanisch zu berührt (beispielsweise 10 % der Fläche), während der Rest der Fläche frei schwingen kann. Das piezoelektrische Element wird damit im Dickenschwingen weniger beeinflusst. Ferner kann die Beeinflussung durch geeignete Wahl des Prozentsatzes der Flächenberührung auch gezielt eingestellt und genutzt werden.

Gemäß einem Ausführungsbeispiel kann das Zwischenelement aber auch ein Formteil aufweisen. Das Formteil weist Plastik auf. Das Zwischenelement ist ein 3D-Kunststoff-Formteil. Das Formteil weist Leiterbahnen zur elektrischen Kontaktierung auf. Die Leiterbahnen können an einer Außenseite des Zwischenelements verlaufen. Alternativ oder zusätzlich kann das Zwischenelement innen liegende Leiterbahnen aufweisen.

Vorzugsweise sind an einer Oberfläche des Formteils elektrische Leiterbahnen gebildet. Insbesondere ist das Zwischenelement durch ein Verfahren hergestellt, bei dem mit Hilfe von Laserbearbeitung auf einem Plastik-Formteil, das mit ca. 4 % Metallpartikeln dotiert ist, an der Oberfläche elektrische Leiterbahnen gebildet werden können.

Gemäß einem Ausführungsbeispiel sind ein Material und/oder eine Struktur des Zwischenelements zur Schwingungsentkopplung oder -dämpfung ausgebildet. Bevorzugt ist das Zwischenelement elastisch ausgebildet. Vorzugsweise ist das Zwischenelement so elastisch gestaltet, dass Schwingungen insbesondere durch die akustische Welle im 13,56 MHz-bereich gut absorbiert werden. Dies kann im Zusammenspiel der Reliefform und der Materialeigenschaft erreicht werden. Damit wird ein sehr flexibel einsetzbarer und gut einstellbarer Transponder zur Verfügung gestellt.

Gemäß einem Ausführungsbeispiel ist das Zwischenelement thermisch isolierend ausgebildet. Vorzugsweise weist das Zwischenelement ein thermisch sehr gut isolierendes Material auf. Damit kann die temperaturempfindliche Elektronik des Transponders effektiv vor kurzzeitig auftretenden höheren Temperaturen geschützt werden.

Gemäß einem weiteren Aspekt wird die Verwendung eines miniaturisierten Transponders beschrieben. Der miniaturisierte Transponder entspricht vorzugsweise dem oben beschriebenen Transponder. Alle Eigenschaften, die in Bezug auf den Transponder oder die Verwendung offenbart sind, sind auch entsprechend in Bezug auf den jeweiligen anderen Aspekt offenbart und umgekehrt, auch wenn die jeweilige Eigenschaft nicht explizit im Kontext des jeweiligen Aspekts erwähnt wird. Der Transponder wird in einem Objekt, beispielsweise in einem Metallwerkzug oder einen 3D Druckobjekt verwendet.

Der Transponder ist vollständig in dem Objekt eingebettet. Insbesondere sind durch den Transponder keine Oberflächendefekte des Objekts erkennbar. Der Transponder verbleibt während der Lebensdauer des Objekts in dem Objekt. Mit anderen Worten, eine Entfernung des Transponders aus dem Objekt ist nicht vorgesehen. Der Transponder verbleibt in dem Objekt zur Gewinnung von Messdaten aus einem Inneren des Objekts und/oder zur Identifizierung des Objekts und/oder zur Steuerung des Objekts.

Alternativ dazu ist der Transponder mit einer Oberfläche eines metallischen Objekts, beispielsweise einer Metallplatte oder eines Metallrohrs gekoppelt. Die Oberfläche kann eine Außenfläche und/oder eine Innenfläche des Objekts sein. Der Transponder kann lösbar oder permanent mit der Oberfläche gekoppelt sein. Beispielsweise ist der Transponder magnetisch oder mit Hilfe eines Klebstoffs mit der Metallfläche verbunden. Vorzugsweise ist der Klebstoff elastisch ausgebildet. Der Transponder ist zur Identifizierung des Objekts und/oder zur Gewinnung von Messdaten und/oder zur Steuerung des Objekts mit der Oberfläche des Objekts gekoppelt.

Für das Gewinnen von Messdaten kann der Transponder noch angeschlossene Sensoren, beispielsweise MEMS Sensoren, aufweisen. Zur Identifizierung kann der Transponder ferner eine Identifikationsnummer aufweisen. Vorzugsweise kann der Transponder als Eingabeelement benutzt werden. Zu diesem Zweck kann ein Display an einer Oberfläche des Objekts angebracht sein, über welches ein Benutzer Daten eingeben kann.

Gemäß einem weiteren Aspekt wird ein akustisches Übertragungssystem beschrieben. Die deutsche Patentanmeldung mit dem Aktenzeichen 10 2020 108 905.8, deren Inhalt durch Referenz Teil dieser Offenbarung ist, beschreibt ein entsprechendes akustisches Übertragungssystem und ein Konzept zur Verwendung der akustischen Welle zur Übertragung von Information zum Zweck der Identifikation durch das Material Metall eines Werkzeuges oder eines 3D Druckteiles.

Das akustische Übertragungssystem hat eine Primärseite und eine Sekundärseite. Das Übertragungssystem weist auf der Primärseite eine Sendeeinheit, eine Empfangseinheit (ein so genannter "Reader") und einen elektroakustischen Wandler, beispielsweise ein piezoelektrisches Element, auf.

Die Sendeeinheit ist dafür vorgesehen und ausgebildet, ein Sendesignal bereitzustellen. Die Empfangseinheit ist dafür vorgesehen und ausgebildet, ein Empfangssignal als Antwort auf das Sendesignal zu empfangen. Der elektroakustische Wandler ist dafür vorgesehen und ausgebildet, das Sendesignal in ein akustisches Signal und ein akustisches Signal in ein Empfangssignal zu wandeln.

Ferner weist das akustische Übertragungssystem auf der Sekundärseite einen miniaturisierten Transponder auf. Der miniaturisierte Transponder weist einen Transponderchip sowie einen elektroakustischen Wandler (piezoelektrisches Element) auf.

Der miniaturisierte Transponder entspricht dem oben beschriebenen miniaturisierten Transponder. Insbesondere weist der miniaturisierte Transponder alle im Zusammenhang mit dem obigen Transponder beschriebenen Merkmale auf. Der miniaturisierte Transponder ist dazu vorgesehen und ausgebildet, ein Empfangssignal zu empfangen und ein Sendesignal zu senden. Der Transponder ist dazu ausgebildet und angeordnet, den Takt der Empfangseinheit als Systemtakt zu verwenden. Das piezoelektrische Element des miniaturisierten Transponders der Sekundärseite kann in akustischen Kontakt mit dem elektroakustischen Wandler der Primärseite treten.

Ferner weist das akustische Übertragungssystem ein akustisches Koppelmedium zwischen der Primärseite und der Sekundärseite auf. Das Koppelmedium ist für akustische Signale durchlässig. Das Koppelmedium kann ein Gel oder Öl aufweisen.

Das akustische Übertragungssystem nutzt die akustische Welle zur Übertragung von Information zum Zweck der Identifikation eines Objekts, beispielsweise eines Werkzeugs aus Metall oder eines 3D Druckteiles. Dieses Prinzip ist im Wesentlichen unabhängig von der Oberfläche des Objektes, welches identifiziert werden soll.

Die Oberfläche kann beispielsweise vollständig geschlossen sein, und den akustischen Tag zu Identifikation im Inneren tragen. Weiterhin ist es möglich, die gesamte Oberfläche des Objekts zu bearbeiten, und die Identifikation dennoch zu erhalten. Alternativ dazu kann der Transponder mit der Oberfläche des Objekts gekoppelt sein. Um eine Bearbeitung der Oberfläche zu ermöglichen, kann der Transponder auch lösbar mit der Oberfläche verbunden sein. Damit wird ein zuverlässiges, effizientes System zur Informationsübertragung zur Verfügung gestellt, welches unabhängig von der weiteren Prozessierung des zu identifizierenden Objekts ist.

Dadurch dass der akustischen Transponder besonders klein (miniaturisiert) und einfach ausgeführt ist, kann er ferner auch in kleine Objekte (Werkzeuge oder Metallteile oder Metallplatten oder Metallrohre) eingebettet oder an diese gekoppelt werden, ohne die Struktur wesentlich zu schwächen. Diese Miniaturisierung ist beispielsweise auch ein Vorteil gegenüber Schleifenantennen, die etwa im 13,56 MHz Bereich verwendet werden, und nicht effizient so klein gestaltet werden können, wie es die akustische Bauform ermöglicht. Dadurch wird ein besonders flexibles System zur Informationsübertragung zur Verfügung gestellt. Die Miniaturisierung des Transponders ermöglicht ferner eine sehr genaue Positionsbestimmung und damit ein sehr effizientes Auslesen des Transponders.

Gemäß einem Ausführungsbeispiel ist die Empfangseinheit dazu ausgebildet und angeordnet mehrere piezoelektrische Elemente, beispielweise zwei, drei, fünf oder zehn piezoelektrische Elemente, anzusteuern. Dadurch wird eine größere Fläche zur Erfassung mehrerer akustischer Transponder gebildet. Dies kann entweder kontinuierlich geschehen, oder zeitlich ablaufgesteuert durch ein Multiplex-Verfahren. Auf diese Weise kann auch ein Display zur HMI (Human Machine Interface - Mensch-/Maschinen-Benutzerschnittstelle) Eingabe aufgebaut werden.

Gemäß einem Ausführungsbeispiel ist die Empfangseinheit dazu ausgebildet und angeordnet ein piezoelektrisches Element anzusteuern, welches größer als jenes des miniaturisierten Transponders ist. Dadurch kann der Erfassungsbereich vergrö-ßert werden und/oder mehrere akustische Transponder können angesprochen werden.

Gemäß einem weiteren Aspekt wird ein Verfahren zur Herstellung eines miniaturisierten Transponders beschrieben. Vorzugsweise wird durch das Verfahren der oben beschriebene Transponder hergestellt. Alle Eigenschaften, die in Bezug auf den Transponder oder das Verfahren offenbart sind, sind auch entsprechend in Bezug auf den jeweiligen anderen Aspekt offenbart und umgekehrt, auch wenn die jeweilige Eigenschaft nicht explizit im Kontext des jeweiligen Aspekts erwähnt wird. Das Verfahren weist die folgenden Schritte auf:
A) Bereitstellen einer Vielzahl von Transponderchips aufweisend eine Vielzahl integrierter Schaltkreise auf einem Wafer. Die Transponderchips können jeweils wenigstens ein Anschlusselement, vorzugsweise zwei Anschlusselemente, aufweisen. Die Anschlusselemente sind vorzugsweise als bumps ausgebildet. Die Anschlusselemente weisen vorzugsweise Gold auf.
   Die Transponderchips werden vorzugsweise als Bare Die des miniaturisierten Transponders verwendet. Die Transponderchips weisen jeweils eine maximale Höhe von 170 µm auf.
B) Bereitstellen einer Vielzahl von piezoelektrischen Elementen. Die piezoelektrischen Elemente sind scheibenförmig ausgebildet. Alternativ dazu können die piezoelektrischen Elemente aber auch rechteckig ausgebildet sein. Die piezoelektrischen Elemente weisen beispielsweise homogenes PZT auf. Die piezoelektrischen Elemente weisen eine maximale Höhe von 300 µm, bevorzugt 200 µm, auf. Das jeweilige piezoelektrische Element ist ein elektroakustischer Wandler. Das jeweilige piezoelektrische Element fungiert als Substrat des miniaturisierten Transponders.
   Jeweils eine Elektrode ist auf einer Unterseite und einer Oberseite des jeweiligen piezoelektrischen Elements ausgebildet. Vorzugsweise befindet sich Elektrodenmaterial auch an wenigstens einer Seitenfläche des piezoelektrischen Elements. Die Elektroden weisen ein Material mit elastischen Eigenschaften, beispielswese Silber, auf. Insbesondere ist das Material der Elektroden elastischer als das Material der Anschlusselemente.
C) Bereitstellen eines Verbindungsmittels, beispielsweise eines Klebstoffs. Das Verbindungsmittel weist vorzugsweise ein Epoxidharz auf. Das Verbindungsmittel weist elastische Eigenschaften auf. Für den Fall, dass zwischen piezoelektrischem Element und Transponderchip eine Leiterplatte vorgesehen ist, kann dieser Schritt auch entfallen.
D) Elektrische und mechanische Verbindung von Transponderchips und piezoelektrischen Elementen mit Hilfe des Verbindungsmittels. Insbesondere werden das jeweilige piezoelektrische Element und der jeweilige Transponderchip mittels Flip-Chip Montage miteinander verbunden. Für den Fall, dass zwischen piezoelektrischem Element und Transponderchip eine Leiterplatte vorgesehen ist, kann dieser Schritt auch entfallen. Vielmehr wird in diesem Schritt die Leiterplatte mit dem piezoelektrischen Element und dem Transponderchip, der hier vorzugsweise als gepackter Chip ausgeführt ist, verbunden.

Ferner kann an dieser Stelle das Aufbringen einer Umhüllung bzw. einer Oberflächenpassivierung erfolgen. Die Oberflächenpassivierung dient zum Schutz gegen Korrosion. Ferner kann die Oberflächenpassivierung dazu beitragen eine Oberseite des Transponders von Druck und Temperatur zu entkoppeln.

E) Separation in Einzelbauteile zur Herstellung einer Vielzahl von miniaturisierten Transpondern.

In einem optionalen weiteren Schritt kann vor dem Verbinden von Transponderchip und piezoelektrischem Element das oben beschriebene Zwischenelement bereitgestellt und auf dem piezoelektrischen Element angeordnet werden. Anschließend wird der Transponderchip mit Hilfe eines Verbindungsmittels mit einer Oberseite des Zwischenelements verbunden.

Das Verfahren ermöglicht in Form des so genannten Wafer Level Packaging eine parallele Verarbeitung und Testung einer gro-ßen Anzahl von Einheiten und damit eine effiziente und kostengünstige Bereitstellung einer Vielzahl von miniaturisierten Transpondern.

Die Offenbarung weist unter anderem die folgenden Aspekte auf:
1. Akustischer Transponder (1) für ein akustisches Übertragungssystem aufweisend:
   - einen Transponderchip (2),
   - ein piezoelektrisches Element (4) zur Umwandlung einer Trägerfrequenz in eine elektrische Spannung,
   wobei der Transponder (1) eine miniaturisierte Bauform aufweist.
2. Akustischer Transponder (1) gemäß Aspekt 1,
   wobei der Transponder (1) eine Höhe (h) < 3 mm aufweist.
3. Akustischer Transponder (1) gemäß Aspekt 1 oder 2,
   wobei das piezoelektrische Element (4) eine Höhe ≤ 300 µm aufweist.
4. Akustischer Transponder (1) gemäß einem der vorangehenden Aspekte,
   wobei der Transponder (1) dazu ausgebildet ist vollständig in ein Werkstück eingebettet zu werden.
5. Akustischer Transponder (1) gemäß Aspekt 4,
   wobei das Werkstück ein metallisches Bauteil und/oder ein 3D Druckteil ist.
6. Akustischer Transponder (1) gemäß einem der vorangehenden Aspekte,
   wobei der Transponderchip (2) mittels Flip-Chip Technologie auf das piezoelektrische Element (4) aufgebracht ist.
7. Akustischer Transponder (1) gemäß einem der vorangehenden Aspekte,
   wobei die Höhe des piezoelektrischen Materials derart eingestellt ist, dass sich eine Dickenresonanz im Bereich von 9 MHz bis 14 MHz ausbildet.
8. Akustischer Transponder (1) gemäß einem der vorangehenden Aspekte,
   ferner aufweisend wenigstens zwei Elektroden (5), wobei die Elektroden (5) wenigstens an einer Unterseite (4b) und an einer Oberseite (4a) des piezoelektrischen Elements (4) ausgebildet sind, und wobei die Elektroden (5) zumindest teilweise elastisch ausgebildet sind.
9. Akustischer Transponder (1) gemäß einem der vorangehenden Aspekte oder gemäß Aspekt 8,
   wobei eine elektrische Impedanz zwischen dem piezoelektrischen Element (4) und dem Transponderchip (2) durch eine Bauform des piezoelektrischen Elements (4) und/oder der Elektroden (5) eingestellt ist.
10. Akustischer Transponder (1) gemäß einem der vorangehenden Aspekte,
   ferner aufweisend wenigstes ein Element zur elektrischen Impedanzanpassung.
11. Akustischer Transponder (1) gemäß Aspekt 10,
   wobei der Transponder (1) einen Induktor zur Einstellung der Impedanz aufweist, und wobei der Induktor parallel zu einer Kapazität des piezoelektrischen Elements (4) geschaltet ist.
12. Akustischer Transponder (1) gemäß einem der vorangehenden Aspekte,
   wobei der Transponderchip (1) ein NFC Chip ist.
13. Akustischer Transponder (1) gemäß einem der vorangehenden Aspekte,
   ferner aufweisend wenigstens einen MEMS-Sensor.
14. Akustischer Transponder (1) gemäß einem der vorangehenden Aspekte,
   ferner aufweisend eine Identifikationsnummer zur sicheren Authentifizierung.
15. Akustischer Transponder (1) gemäß einem der vorangehenden Aspekte,
   wobei die Miniaturisierung des akustischen Transponders (1) zu einer Positionsbestimmung und zugleich mit Identifikation und/oder Authentifizierung genutzt werden kann.
16. Akustischer Transponder (1) gemäß einem der vorangehenden Aspekte,
   wobei das piezoelektrische Element (4) aus bleifreiem Material besteht.
17. Verwendung eines miniaturisierten akustischen Transponders (1) in einem Objekt (8), wobei der Transponder (1) vollständig in dem Objekt (8) eingebettet ist und wobei der Transponder (1) während der Lebensdauer des Objekts (8) in dem Objekt (8) verbleibt zur Gewinnung von Messdaten aus einem Inneren des Objekts (8) und/oder zur Identifizierung des Objekts (8) und/oder zur Steuerung des Objekts (8).
18. Verwendung nach Aspekt 17,
   wobei der miniaturisierte akustische Transponder (1) in der Funktion mit sicherer Authentifizierung als Eingabeelement genutzt werden kann.
19. Akustisches Übertragungssystem aufweisend
   A) auf einer Primärseite:
      - eine Sendeeinheit, die dafür vorgesehen und geeignet ist, ein Sendesignal bereitzustellen,
      - eine Empfangseinheit, die dafür vorgesehen und geeignet ist, ein Empfangssignal als Antwort auf das Sendesignal zu empfangen,
      - einen elektroakustischen Wandler, der dafür vorgesehen und geeignet ist, das Sendesignal in ein akustisches Signal und ein akustisches Signal in ein Empfangssignal zu wandeln,
   B) auf einer Sekundärseite:
      - einen miniaturisierten Transponder (1) nach einem der Aspekte 1 bis 16, wobei der Transponder (1) dazu vorgesehen und geeignet ist, ein Empfangssignal zu empfangen und ein Sendesignal zu senden,
   C) zwischen der Primärseite und der Sekundärseite ein akustisches Koppelmedium.
20. Akustisches Übertragungssystem nach Aspekt 19,
   wobei der Transponder (1) dazu ausgebildet und angeordnet ist, den Takt der Empfangseinheit als Systemtakt zu verwenden.
21. Akustisches Übertragungssystem nach Aspekt 19 oder 20, wobei die Empfangseinheit dazu ausgebildet ist mehrere piezoelektrisches Elemente (4) anzusteuern und/oder ein piezoelektrisches Element (4) anzusteuern, welches größer als jenes des Transponders (1) ist, und dadurch den Erfassungsbereich zu vergrößern und/oder mehrere akustische Transponder (1) anzusprechen.
22. Verfahren zur Herstellung eines miniaturisierten Transponders (1) für ein akustisches Übertragungssystem aufweisend die folgenden Schritte:
   A) Bereitstellen einer Vielzahl von Transponderchips (2) aufweisend eine Vielzahl integrierter Schaltkreise auf einem Wafer;
   B) Bereitstellen einer Vielzahl von piezoelektrischen Elementen (4), wobei jeweils eine Elektrode (5) wenigstens auf einer Unterseite (4b) und einer Oberseite (4a) des jeweiligen piezoelektrischen Elements (4) ausgebildet ist;
   C) Bereitstellen eines Verbindungsmittels (6);
   D) Elektrische und mechanische Verbindung von Transponderchips (2) und piezoelektrischen Elementen (4) mit Hilfe des Verbindungsmittels (6);
   E) Separation in Einzelbauteile zur Herstellung einer Vielzahl von miniaturisierten Transpondern (1).
23. Verfahren nach Aspekt 22,
   wobei das jeweilige piezoelektrische Element (4) und der jeweilige Transponderchip (2) mittels Flip-Chip Montage miteinander verbunden werden.
24. Verfahren nach Aspekt 22 oder 23,
   ferner aufweisend den Schritt;
   Aufbringen einer Passivierung, wobei die Passivierung vor der Separation in Einzelbauteile aufgebracht wird.
   Die nachfolgend beschriebenen Zeichnungen sind nicht als maßstabsgetreu aufzufassen. Vielmehr können zur besseren Darstellung einzelne Dimensionen vergrößert, verkleinert oder auch verzerrt dargestellt sein.

Elemente, die einander gleichen oder die die gleiche Funktion übernehmen, sind mit gleichen Bezugszeichen bezeichnet.

Es zeigen:
- Figur 1: eine Schnittdarstellung einer Zwischenstufe in der Herstellung eines miniaturisierten Transponders gemäß einem Ausführungsbeispiel,
- Figur 2: eine Schnittdarstellung eines miniaturisierten Transponders gemäß einem Ausführungsbeispiel,
- Figur 3: eine Schnittdarstellung eines in ein Objekt eingebetteten miniaturisierten Transponders,
- Figur 4: eine Schnittdarstellung eines miniaturisierten Transponders gemäß einem weiteren Ausführungsbeispiel,
- Figur 5: eine Schnittdarstellung eines miniaturisierten Transponders gemäß einem weiteren Ausführungsbeispiel,
- Figur 6: eine Schnittdarstellung eines miniaturisierten Transponders gemäß einem weiteren Ausführungsbeispiel,
- Figur 7: eine Schnittdarstellung eines miniaturisierten Transponders gemäß einem weiteren Ausführungsbeispiel.

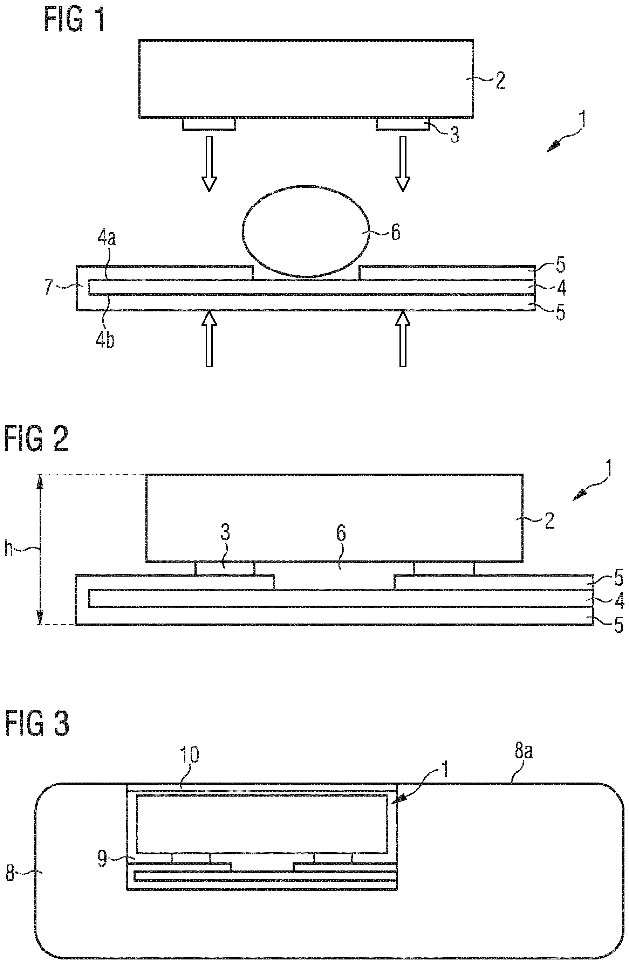

Die Figur 2 zeigt einen akustischer Transponder 1, kurz Transponder 1, in miniaturisierter Bauweise. Der Transponder 1 ist dazu ausgebildet eine Informationsübertragung mittels einer akustischen Welle zu ermöglichen und dafür in ein (nicht dargestelltes) akustisches Übertragungssystem integriert zu werden.

Der Transponder 1 dient zur Identifikation eines Objekts 8 (siehe Figur 3). Das Objekt 8 kann beispielsweise ein metallisches Bauteil (beispielsweise ein Metallwerkzeug) oder ein 3D Druckteil sein. Der Transponder 1 kann beispielsweise eine Identifikationsnummer aufweisen und damit eine sichere Authentifizierung des Objekts 8 gewährleisten.

Der Transponder 1 kann ferner zur Steuerung eines Objekts 8 (beispielsweise einer Batterie) und/oder zu Messungen in einem Inneren eines Objekts 8 eingesetzt werden. Zu letzterem kann der Transponder 1 einen Sensor, beispielsweise einen MEMS Sensor, aufweisen (nicht explizit dargestellt).

Der Transponder 1 weist einen Transponderchip 2 auf. Der Transponderchip 2 weist einen integrierten Schaltkreis auf. Der Transponderchip 2 dient als Bare Die des Transponders 1. Der Transponderchip 2 ist ein NFC Chip und unterstützt damit im Wesentlichen eine Frequenz von 13,56 MHz. Ein NFC Transponderchip bezieht seinen Systemtakt über die Trägerfrequenz vom Reader, und kann daher auch in einem breiteren Frequenzbereich arbeiten, beispielsweise von 9 - 14 MHz. Der Transponderchip 1 weist eine maximale Höhe von 170 µm auf.

Der Transponderchip 2 weist zwei Anschlusselemente 3 auf. Diese sind an einer Unterseite des Transponderchips 2 ausgebildet. Die Anschlusselemente 3 sind in diesem Ausführungsbeispiel Bumps. Die Anschlusselemente 3 weisen ein starres Material, vorzugsweise Gold, auf. Die Anschlusselemente 3 dienen zur elektrischen Verbindung des Transponderchips 2 mit einem piezoelektrischen Element 4.

Das piezoelektrische Element 4 dient der Umwandlung einer Trägerfrequenz als Signalverlauf einer akustischen Welle in den Signalverlauf einer elektrischen Spannung. Es ist ein elektroakustischer Wandler. Das piezoelektrische Element 4 kann PZT oder ein bleifreies Material aufweisen und ist scheibenförmig ausgebildet.

Das piezoelektrische Element 4 weist eine Höhe von < 300 µm, bevorzugt ≤ 200 µm auf. Unter der Höhe des piezoelektrischen Elements 4 wird in diesem Zusammenhang eine Ausdehnung des piezoelektrischen Elements 4 senkrecht zur einer Hauptausdehnungsrichtung des Transponders 1 verstanden.

Das piezoelektrische Element 4 dient als Leiterplatte des Transponders 1 und weist Elektroden 5 auf. Die Elektroden 5 sind wenigstens an einer Unterseite 4b (siehe Figur 1) sowie an einer Oberseite 4b des piezoelektrischen Elements 4 ausgebildet. Die Elektroden 5 können sich auch über eine oder beide Seitenflächen des piezoelektrischen Elements 4 erstrecken zur elektrischen Kontaktierung beider Elektroden von der Oberseite 4a her. So ist der Figur 2 zu entnehmen, dass elektrisch leitfähiges Material 7 (Elektrodenmaterial) eine Seitenfläche des piezoelektrischen Elements 4 umhüllt um somit die untere Elektrode 5 an die Oberseite 4a zu führen.

Die Elektroden 5 sind strukturiert. Insbesondere ist die Elektrode 5 an der Unterseite 4b vollflächig ausgebildet. Im Gegensatz dazu bedeckt die Elektrode 5 an der Oberseite 4a nur einen Teilbereich der Oberseite 4a des piezoelektrischen Elements 4.

Für die Funktion des Transponderchips 2 ist es entscheidend, dass die von einem Reader stammende und über das piezoelektrische Element 4 in eine Spannung gewandelte Trägerfrequenz die richtige Spannungsamplitude hat. Aufgrund der IC Eingangsstruktur ist beispielsweise eine minimale Spannung von 6 Vₚₚ erforderlich. Ferner wird ein bestimmter minimaler Strom benötigt, beispielsweise 0,5 mA. Ergeben sich höhere Spannungen, wird dies durch einen Spannungslimiter im IC begrenzt.

Das piezoelektrische Element 4 stellt einen Kondensator dar. Der Transponderchip 2 setzt wie oben beschrieben eine gewisse Spannung am Eingang voraus, was eine bestimmte Kapazität des piezoelektrischen Elements 4 bedingt. Für ein bestimmtes piezoelektrisches Element 4 ergibt sich bei einer bestimmten Frequenz eine Anschlussimpedanz. Diese wird umso niedriger, je größer die Kapazität ist. Um ein Anpassnetzwerk aus diskreten Bauteilen (beispielsweise einen Induktor) zu vermeiden, kann durch die geeignete Dimensionierung und/oder Strukturierung der Elektroden 5 (siehe oben) sowie des piezoelektrischen Elements 4 eine gut passende Anschlussimpedanz erreicht werden.

Alternativ dazu kann der Transponder 1 auch einen Induktor zur elektrischen Impedanzanpassung aufweisen (nicht explizit dargestellt). Der Induktor wird parallel zur Kapazität des piezoelektrischen Elements 4 verwendet. Mit dem Induktor wird ein Resonanzkreis ausgebildet und damit die Spannung erhöht. Vorzugsweise ist der Induktor so dimensioniert, dass der Imaginärteil der Impedanz an der Betriebsfrequenz kompensiert wird, wie das bei Resonanzkreisen geschieht.

Die Elektroden 5 sind über ein Verbindungsmittel 6, beispielsweise ein Epoxidharz, mit dem Transponderchip 2 elektrisch und mechanisch verbunden. Das Verbindungsmittel 6 ist elastisch ausgebildet, um Schwingungen des piezoelektrischen Elements 4 auszugleichen und eine optimale Anbindung des piezoelektrischen Elements 4 an den Transponderchip 2 zu erwirken, wie weiter unten im Zusammenhang mit der Beschreibung des Herstellungsverfahrens weiter erläutert wird.

Der Transponder 1 ist miniaturisiert ausgebildet. Das bedeutet, dass eine Höhe h und/oder ein Volumen des Transponders 1 sehr kompakt ausgeführt sind, insbesondere kompakter als bei herkömmlichen Transpondern. Der Transponder 1 weist eine maximale Höhe h < 3 mm auf. Der Transponder 1 weist eine maximale Fläche von 0,4 mm² bis 4 mm² auf. Damit kann der Transponder 1 teilweise oder auch vollständig in das Objekt 8 eingebettet werden, wie aus der Figur 3 ersichtlich ist.

In dem gezeigten Ausführungsbeispiel weist das Objekt 8 dafür eine Ausnehmung oder ein Sackloch 9, auf, in welcher der Transponder 1 vollständig eingebracht ist. Die Ausnehmung 9 ist durch eine Deckschicht 10 verschlossen. Dadurch sind keinerlei erkennbare Defekte an einer Oberfläche 8a des Objekts wahrnehmbar. Insbesondere kann die Oberfläche 8a des Objekts 8 während dessen Lebensdauer bearbeitet werden, ohne die Funktion des Transponders 1 zu beeinflussen.

In einer alternativen Ausführung (nicht explizit dargestellt) kann der Transponder 1 auch an eine freie Oberfläche oder eine Einbuchtung des Objekts 8 angeklebt sein. Dies setzt einen Hohlraum oder eine freie Fläche des Objekts 8 voraus. In diesem Fall ist der Transponder 1 nicht vollständig in einem Inneren des Objekts 8 integriert.

In einer alternativen Ausführung (nicht explizit dargestellt) kann der Transponder 1 im Rahmen von additive manufacturing (3D Druck) in das Objekt 8 eingebracht sein. In diesem Fall kann der Transponder 1 in ein Ausgangsmaterial eingebettet werden. Anschließend kann über das Ausgangsmaterial noch ein weiteres Material produziert werden, so dass der Transponder 1 vollständig in dem fertigen Objekt 8 eingebettet ist.

Auf Grund der Miniaturisierung des Transponders 1 kann dieser optimal zu einer Positionsbestimmung, zugleich mit Identifikation bzw. Authentifizierung des Objekts 8 genutzt werden. Der miniaturisierte akustische Transponder 1 kann auch als Eingabeelement genutzt werden. Zu diesem Zweck kann ein Display (nicht explizit dargestellt) an einer Oberfläche des Objekts 8 aufgebracht, beispielsweise aufgeklebt, sein. Die Authentifizierung erlaubt dabei zunächst den Zugang zur Eingabe von Informationen, die Position erlaubt das Display auf dem Objekt 8 zu bedienen.

Wie bereits oben beschrieben wird der Transponder 1 in einem akustischen Übertragungssystem (nicht explizit dargestellt) integriert.

Das akustische Übertragungssystem hat eine Primärseite und eine Sekundärseite. Auf der Primärseite weist das Übertragungssystem eine Sendeeinheit, eine Empfangseinheit (Reader) und einen elektroakustischen Wandler auf.

Der Transponder 1 ist auf der Sekundärseite des Übertragungssystems lokalisiert und ist beispielsweise vollständig in dem Objekt 8 integriert. Er empfängt ein von der Sendeeinheit ausgegebenes Empfangssignal und sendet ein Sendesignal 8. Dabei wird eine akustische Welle zur Übertragung von Information beispielweise zum Zweck der Identifikation des Objekts 8 genutzt.

Wenn der Transponder 1 beispielsweise im Schaft eines Bohrers integriert wird, so wird der Schaft bei Nichtbenutzung des Werkstückes in der Fertigungsmaschine so abgelegt, dass er automatisiert wieder ins Bohrfutter eingespannt werden kann. Dieses Gegenstück, in dem der Bohrer verbleibt, kann mit einem entsprechenden akustischen Reader ausgestattet sein, und gegebenenfalls noch ein akustisches Koppelmedium (Gel, auch Öl) enthalten. Der Reader wird dabei ein größeres Piezoelement haben, um eine gute Verbindung immer sicherzustellen. So kann die ID Nummer der abgelegten Werkzeuge etwa ausgelesen und im System ihre Standzeit upgedatet werden.

Es ist auch möglich, den akustischen Reader im Spannfutter der Werkmaschine unterzubringen, welche das Werkzeug, bzw. den Schaft des Werkzeugs, aufnimmt. So könnten Messdaten aus dem Werkzeug aufgenommen werden, und in den Bearbeitungsvorgang einfließen.

Es ist auch möglich, ein 3D Druckteil, wenn es zum Zusammenbau mit anderen Teilen von einem Greifer gehalten wird, zu identifizieren. Der Greifer würde in diesem Fall den akustischen Reader enthalten, und der Vorgang des Greifens erlaubt die mechanische Kopplung zum Werkstück, welche nötig ist, um einen akustischen Kanal für die akustische Welle zu bilden.

Im Folgenden wird ein Verfahren zur Herstellung eines miniaturisierten Transponders 1, vorzugsweise des oben beschriebenen Transponders 1, beschrieben. Das Verfahren weist die folgenden Schritte auf:
In einem ersten Schritt A) wird eine Vielzahl von Transponderchip 1 bereitgestellt. Die Transponderchips 1 sind NFC Chips und arbeiten vorzugsweise in einem Frequenzbereich von 9 bis 14 MHz. Die Transponderchips 1 weisen eine Vielzahl integrierter Schaltkreise auf einem Wafer auf.

Die Transponderchips 1 weisen jeweils zwei Anschlusselemente 3. Die Anschlusselemente 3 weisen vorzugsweise Gold auf. Die Transponderchips 1 weisen jeweils eine maximale Höhe von 170 µm auf.

In einem nächsten Schritt B) wird eine Vielzahl von piezoelektrischen Elementen 4 als Signalwandler bereitgestellt. Die piezoelektrischen Elemente 4 sind scheibenförmig ausgebildet und weisen beispielsweise PZT auf. Die piezoelektrischen Elemente 4 weisen eine maximale Höhe von 300 µm, bevorzugt 200 µm, auf.

An der Unterseite 4b und der Oberseite 4a sowie vorzugsweise an wenigstens einer Seitenfläche des piezoelektrischen Elements 4 ist elektrisch leitfähiges Material 7 (Elektroden 5) ausgebildet zur elektrischen Kontaktierung des jeweiligen piezoelektrischen Elements 4. Die Elektroden 5 weisen ein elastisches Material, vorzugsweise Silber auf. Durch die Elastizität des elektrisch leitfähigen Materials 7 wird sichergestellt, dass die Elektroden 5 bei der Anbindung des piezoelektrischen Elements 4 an den Transponderchip 2 unter Druck nicht brechen.

In einem weiteren Schritt C) wird ein Verbindungsmittel, beispielsweise ein Klebstoff, bereitgestellt. Das Verbindungsmittel weist vorzugsweise ein Epoxidharz auf und ist elastisch. Die Elastizität des Verbindungsmittels 6 ist wichtig um die Schwingungen (Dickenschwingungen) des piezoelektrischen Elements 4 auszugleichen.

In einem nächsten Schritt D) erfolgt die elektrische und mechanische Verbindung von Transponderchips 2 und piezoelektrischen Elementen 4 mit Hilfe des Verbindungsmittels 6 (siehe hierzu insbesondere Figur 1). Insbesondere werden das jeweilige piezoelektrische Element 4 und der jeweilige Transponderchip 2 mittels Direct-Chip-Attach / Flip-Chip Montage miteinander verbunden.

Dafür wird der Wafer mit den Transponderchips 2 gedreht, so dass die Anschlusselemente 3 auf entsprechende Flächen der Elektroden 5 des jeweiligen piezoelektrischen Elements 4 elektrisch kontaktiert werden. Das Verbindungsmittel 6 soll dabei eine dauerhafte mechanische Verbindung ermöglichen. Das Verbindungsmittel 6 zieht sich beim Aushärten etwas zusammen, und drückt so die Anschlusselemente 3 des Transponderchips 2 gegen entsprechenden Kontaktflächen der Elektroden 5. Zugleich soll das Verbindungsmittel 6 etwas elastisch bleiben, um Kräfte im richtigen Ausmaß auf den Transponderchip 2 und das piezoelektrische Element 4 auszuüben. Aus diesem Grund müssen die Elektroden 5 ebenfalls etwas elastisch sein.

In einem weiteren Schritt kann nun ein Aufbringen einer Umhüllung bzw. einer Oberflächenpassivierung erfolgen. Die Oberflächenpassivierung dient zum Schutz gegen Korrosion. Ferner kann die Oberflächenpassivierung dazu beitragen eine Oberseite des Transponders 1 von Druck und Temperatur, wie sie etwa während additive manufacturing kurzzeitig auftreten, zu entkoppeln.

In einem letzten Schritt E) erfolgt die Separation in Einzelbauteile umso eine Vielzahl von miniaturisierten Transpondern 1 herzustellen.

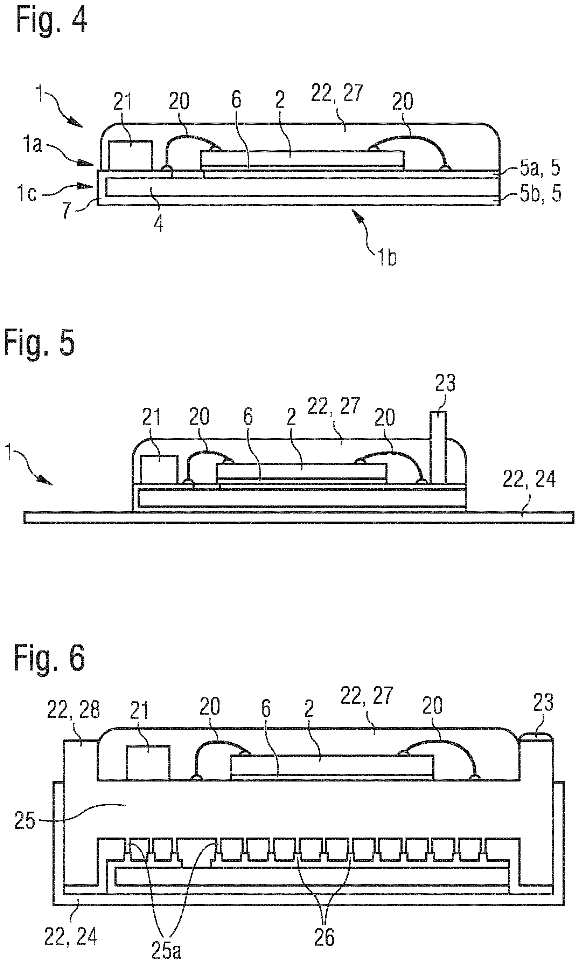

Die Figur 4 zeigt ein weiteres Ausführungsbeispiel für einen miniaturisierten akustischen Transponder 1. Der akustische Transponder 1 gemäß Figur 4 ist (wie auch der Transponder 1 gemäß den Figuren 5 bis 7) zur Schaffung eines Kommunikationskanals zur Übertragung von Information und Energie mittels einer Materialwelle, insbesondere durch eine Metalloberfläche hindurch, ausgebildet.

Der akustische Transponder 1 zeichnet sich dadurch aus, dass eine Informationsverarbeitung, etwa im Sinne des Empfangs eines Kommandos und einer Antwort mit einer Identifikationsnummer, zur Gänze in einem Siliziumchip (Transponderchip 2) erfolgt, und nicht etwa durch Reflektoren für akustische Oberflächenwellen (SAW Transponder) erzeugt wird.

Der Transponder 1 weist, wie bereits in Zusammenhang mit den Figuren 1 bis 3 beschrieben, die folgenden Komponenten auf:
- einen Transponderchip 2 (bevorzugt aus Silizium als Bare Die),
- ein piezoelektrisches Element 4, welches als Dickenschwinger arbeitet (bevorzugtes Verhältnis Durchmesser zu Dicke < 1:20) mit einer Oberseite 4a und einer Unterseite 4b, und
- Elektroden 5 (insbesondere eine obere Elektrode 5a und eine untere Elektrode 5b).

Die in Bezug auf diese Komponenten weiter oben beschriebenen Eigenschaften und Funktionen finden auch auf die im Folgenden beschriebenen Ausführungsbeispiele für den akustischen Transponder 1 Anwendung.

Der Transponderchip 2 ist - an seiner funktionslosen Rückseite - durch ein Verbindungsmittel 6, beispielsweise einen Klebstoff, an dem piezoelektrischen Element 4 mechanisch fixiert. Durch Bonden können elektrische Verbindungen (Verbindungselemente 20) zwischen dem Transponderchip 2 und dem piezoelektrischen Element 4 geschaffen werden. Im einfachsten Fall, für einen reinen ID-Transponder (welcher auf Anfrage des Readers mit seiner einzigartigen Identitätsnummer antwortet) sind zwei Anschlüsse nötig, die von Anschlussflächen der beiden Elektroden 5, 5a, 5b des piezoelektrischen Elements 4 geführt werden.

Der Transponder 1 ist besonders geeignet zur Kopplung an eine Oberfläche eines metallischen Objekts 8, beispielsweise eines Metallrohres. Vorzugsweise ist ein Material des Objekts 8 (z.B. die Metallplatte) homogen, und es gibt eine Seite für die Einkopplung und eine Seite für die Auskopplung an das piezoelektrische Element 4. Diese kann durch eine dünne Klebeschicht (zwischen Metallplatte und piezoelektrischem Element 4) realisiert sein, wie weiter unten beschrieben wird. Die akustische Welle des Transponders 1 ist im Wesentlichen normal zur Oberfläche in das Material (z.B. Metallplatte) hinein gerichtet.

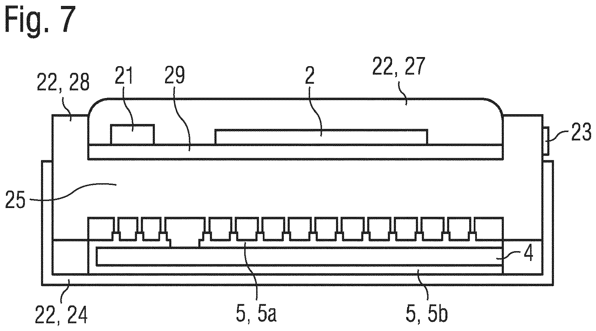

In einem Ausführungsbeispiel ist die metallisierte Oberseite (obere Elektrode 5a) des piezoelektrischen Elements 4 strukturiert (siehe beispielsweise Struktur 26 in den Figuren 6 und 7). Die obere Elektrode 5a kann in Form eines Layouts strukturiert sein, um Anschlussflächen für einen Induktor 21, welcher weiter unten näher beschrieben wird, bereitzustellen. Durch die Strukturierung der oberen Elektrode 5a kann der Induktor 21 mit dem Verfahren des Reflow-Lötens oder alternativ dazu durch leitfähiges Kleben assembliert werden.

Das Strukturieren der oberen Elektrode 5a kann bereits vor dem Vorgang des Polens des piezoelektrischen Elements 4 erfolgen, zu dem Zweck, Teile der Fläche des piezoelektrischen Elements 4 später im Betrieb von elektrisch angeregter Dickenschwingung frei zu halten. Anders ausgedrückt kann das piezoelektrische Element 4 durch gezielte Strukturierung der oberen Elektrode 5a in Bereiche unterteilt werden, die entweder stärker eine resonante Dickenschwingung aufweisen, oder ungepolt und daher ruhig / nicht vibrierend bleiben.

Der Transponder 1 weist weiterhin ein Schutzelement 22 auf. In diesem Ausführungsbeispiel weist das Schutzelement 22 eine Vergussmasse 27 auf. Die Vergussmasse 27 ist an einer Oberseite 1a des Transponders (entspricht damit der Rückseite, also der von dem Objekt 8 abgewandten Seite, des Transponders 1) ausgebildet. Die Vergussmasse 27 kapselt die Oberseite 1a und zumindest Teile einer Seitenfläche 1b des Transponders 1 vollständig ein. Die Vergussmasse 27 schützt den Transponder 1 vor äußeren Einflüssen.

Die Vergussmasse 27 kann transparent sein, um es zu ermöglichen, dass der akustische Transponder Licht in den Innenraum, beispielsweise eines Metallrohrs, abgibt. Die Vergussmasse 27 kann opak sein, um eine Beeinflussung der Funktion des Transponders 1 durch Licht zu verhindern. Die Vergussmasse 27 kann magnetisierbare Partikel enthalten.

Um zu verhindern, dass die Vergussmasse 27 einen großen Anteil der Fläche des piezoelektrischen Elements 4 auf der Innenseite bedeckt, können schwer benetzbare Strukturen / Kugeln als untere Lage verwendet werden.

Ferner ist es möglich, eine dünne Leiterplatte oder Platine zwischen dem piezoelektrischen Element 4 und der Vergussmasse 27 vorzusehen (nicht explizit dargestellt). Diese Platine kann an ihrer Unterseite Relief-Strukturen aufweisen, so dass nur ein geringer Prozentsatz der Fläche der Platine Kontakt mit dem piezoelektrischen Element 4 hat.

Der Transponder 1 weist ferner den oben erwähnten Induktor 21 auf. Der Induktor 21 ist elektrisch parallel an die beiden Elektroden 5, 5a, 5b angeschlossen. Der Induktor 21 ist in diesem Ausführungsbeispiel als ein diskretes, elektrisches Bauteil ausgebildet. Beispielsweise ist der Induktor 21 in einem SMD Format ausgebildet. Hier sind drahtgewickelte Bauformen, oder keramische Multilayer-Bauformen möglich.

Der Transponder 1 kann beispielsweise die Form eines flachen Zylinders aufweisen. In der Anwendung wird der Transponder 1 an eine flache, ebene und glatte Metallfläche akustisch angebunden, beispielsweise durch Verwenden eines Koppelelements mit bestimmter Schichtdicke. Das Koppelelement kann einen Klebstoff, beispielsweise ein Epoxidharz, aufweisen. In einem weiteren Ausführungsbeispiel (siehe hierzu Figur 5) kann der Transponder 1 ferner eine Schnittstelle 23 zum externen Anschluss des Transponders 1 aufweisen. In diesem Ausführungsbeispiel ist die Schnittstelle 23 elektrisch und mechanisch mit der oberen Elektrode 5a verbunden und ragt aus der Oberseite des Transponders 1 hervor zur elektrischen Verbindung mit einer externen elektronischen Komponente.

Der Transponder 1 kann ferner ein weiteres Schutzelement 22, beispielsweise eine Schutzschicht oder Membran 24 aufweisen (Figur 5). Die Membran 24 ist an einer Unterseite 1b des Transponders 1 ausgebildet. Vorzugsweise ist die Membran 24 mit der Unterseite 4b des piezoelektrischen Elements bzw. mit der unteren Elektrode 5b verklebt. Die Membran 24 kann Stahl, beispielsweise ein Stahlblech, aufweisen. Die Membran 24 kann magnetisch sein.

Zur Kopplung des Transponders 1 mit der Metalloberfläche des Objekts 8 kann die Membran 24 mit der Oberfläche des Metalls verklebt werden. Auch eine magnetische Anbindung an die Metalloberfläche des Objekts 8, zur Ausbildung einer lösbaren Verbindung, ist vorstellbar. Eine Fläche der Membran 24 ist größer als eine Fläche des piezoelektrischen Elements 4 bzw. des Transponders 1, um eine optimale Anbindung an die Metalloberfläche zu gewährleisten.

Um einen guten akustischen Kontakt zwischen der Membran 24 bzw. dem piezoelektrischen Element 4, und dem akustischen Kanal (Oberfläche des metallischen Objekts 8) zu erreichen, kann eine Beschichtung der Oberfläche von Membran 24 oder piezoelektrischen Element 4 mit einer dünnen elastischen Schicht vorgesehen werden (nicht explizit dargestellt). Diese hat den Zweck, die sich aufgrund von Oberflächenrauigkeit der gegenüberliegenden Metallflächen bildenden Hohlräume weitgehend auszufüllen mit einem Medium, welches deutlich höhere akustische Impedanz hat, als Luft. Die Effizienz der akustischen Kopplung kann dadurch wesentlich erhöht werden.

Um ein Gehäuse für den akustischen Transponder 1 herzustellen, kann ferner ein Schutzelement 22 in Form einer Umrandung entlang des Umfangs des Transponders 1 vorgesehen werden (nicht explizit in Figur 5 dargestellt, siehe zum Beispiel Umrandung 28 in Figur 6). Mit anderen Worten, eine Umrandung wird entlang der Seitenfläche 1c des Transponders 1 ausgebildet. Eine Höhe der Umrandung 28 ist dabei größer als eine Höhe der Bauteile in einem inneren Bereich des Transponders 1. Das Volumen im Inneren der Umrandung 28 kann dann mit der Vergussmasse 27 ausgefüllt werden, so dass die Komponenten im Inneren geschützt sind. Die Umrandung 28 kann beispielsweise auf die oben beschriebene Membran 24 aufsetzen, um einen von allen Seiten (Oberseite 1a, Seitenfläche 1c, Unterseite 1b) geschützten Transponder 1 zu erhalten.

Um eine Haltekraft des akustischen Transponders 1 auf der metallischen Oberfläche zu erreichen, kann die Umrandung 28 ein magnetisches Material aufweisen. Die Umrandung 28 kann in Form eines Ringmagneten ausgebildet sein. Wie weiter oben erwähnt, kann auch die Membran 24 entsprechend magnetisch sein oder magnetisiert werden.

Als Material für die Umrandung 28 / die Membran 24 bietet sich beispielsweise Stahl an, um den Transponder 1 vor der Abgabe von verunreinigenden Gasen zu bewahren. Viele Anwendungen setzen für Sensoren in Gas- und Druckbehältern, die aus Edelstahl bestehen, voraus, dass im Inneren nur Oberflächen aus Edelstahl verwendet werden dürfen, und eine Verunreinigung der Gase auszuschließen. So wäre es auch möglich, Membran 24 und Umrandung 28 als eine Hülse mit geschossener Oberfläche auszuführen.

Wenn das Gegenstück des akustischen Übertragungssystems an der Rohr Außenseite ebenfalls geeignet magnetisch ist, ist eine Haltekraft und zugleich eine Ausrichtung der beiden akustischen Gegenstücke (auf der Primärseite und Sekundärseite) gegeben.

Soll der Transponder 1 an eine gekrümmte Fläche gekoppelt werden, also beispielsweise im Inneren eines Rohres montiert werden, ist die Länge des schwingenden piezoelektrischen Elements 4 in Relation zu einem Rohr-Innendurchmesser entscheidend, um Verluste durch destruktive Interferenz gering zu halten. So kann die Auflagefläche des akustischen Transponders 1 in diesem Fall im Wesentlichen die eines Rechtecks sein, dessen kurze Seite entlang des Rohrdurchmessers liegt, und dessen lange Seite entlang der Rohr-Länge (gerades Stück) liegt.

Eine weitere Ausführungsmöglichkeit sieht vor, den Induktor 21 in Form eines Layouts als planare Spule auszuführen (Ausführung als transparenter passiver Repeater ohne Transponderchip 2, nicht explizit dargestellt). Um für das piezoelektrische Element 4 unabhängig von der planaren Spule eine großflächige Elektrodenform erhalten zu können, kann eine Schichtenfolge von piezoelektrischem Element 4 - obere Elektrode 5, 5a - isolierende und / oder magnetisch isolierende Schicht (beispielsweise eine Ferritschicht) - planare Spule verwendet werden.

Da die planare Spule auch als Emitter eines H-Wechselfeldes wirkt, und in konventioneller NFC Technologie als Schleifenantenne genutzt wird, entsteht mit diesem Aufbau (auch ohne Transponderchip 2) ein transparenter Wandler zwischen H-Wechselfeld und akustischer Welle. Dieser Wandler, aufgeklebt auf eine ebene glatte Metallfläche setzt folglich NFC Kommunikation vom H-Wechselfeld in Luft auf eine Materialwelle um. Ein gleichartiger gegenüberliegend an der Metallfläche aufgeklebter Wandler würde entsprechend von der Materialwelle in H-Wechselfeld umsetzen. Es lässt sich dadurch ein transparenter Durchtritt / transparenter, passiver Repeater für NFC Signale durch Metall erreichen.

Die Ausführung des transparenten Repeaters kann sich (aufgrund der Eigenschaften des Kanals) für den NFC Übertragungsstandard im 13,56 MHz Frequenzbereich eignen, und dabei die Protokolle nach ISO/IEC14443 und ISO/IEC15693 unterstützen. Auch das Verfahren der Lastmodulation mit Hilfsträgerfrequenz, das bei diesen beiden Standards angewendet wird, kann angewendet werden, da eine elektrische Last die elastischen Eigenschaften eines piezoelektrischen Elements 4 ändert und somit im an der Transponder-Seite reflektierten Signal für den Reader die übliche Modulation (Kombination aus Phasen-und Amplitudenmodulation) erkennbar ist.

Die Ausführung kann zudem so gestaltet sein, dass der Bereich der akustischen Welle unterhalb des piezoelektrischen Elements 4 senkrecht zu einer Oberfläche in das Material hinein eine kleine Fläche hat.

Ebenso kann der transparente Repeater mehr als einen Induktor 21 aufweisen (nicht explizit dargestellt). Beispielsweise kann der Repeater zwei als planare Spulen ausgeführte Induktoren aufweisen. Eine erste planare Spule ist über dem piezoelektrischen Element 4 (also oberhalb der Oberseite 4a des piezoelektrischen Elements) ausgebildet. Die erste planare Spule hat eine kleine Fläche (z.B. 5 mm Durchmesser). Eine zweite planare Spule ist unterhalb des piezoelektrischen Elements 4 ausgebildet. Eine Fläche der zweiten planaren Spule ist größer als die Fläche der ersten planaren Spule. Die zweite planare Spule ist induktiv mit der ersten planaren Spule gekoppelt. Die zweite planare Spule ist zur magnetischen Isolierung beispielsweise auf einer Ferritfolie angeordnet.

Die erste planare Spule lässt sich durch Kopplung mit der zweiten oder sekundären planaren Spule zu einer größeren Antenne im üblichen Format von ID-Karten (ID1 nach ISO/IEC7810 bzw. Antennenklasse 1 - 6 nach ISO/IEC14443) erweitern.

Die flächengrößere zweite planare Spule (Sekundärantenne) kann als ein dünnes "Pflaster" an der Oberfläche des Objekts 8, insbesondere des Metalls, ausgeführt sein. Die zweite planare Spule kann einen separaten Resonanzkreis nahe an 13,56 MHz darstellen, indem die Sekundärspule mit einer geeigneten Kapazität verbunden ist. Ein zweites Element ("Pflaster" oder Sekundärspule) wird also durch induktive Kopplung (zwei Spulen liegen räumlich nahe beieinander) an die erste planare Spule angebunden. Praktisch kann das "Pflaster" ein Loch in der Größe der ersten planaren Spule aufweisen, das die Ankopplung in einer Ebene bei der Montage erleichtert.

Die Figur 6 zeigt ein weiteres Ausführungsbeispiel für einen akustischen Transponder 1. Der Transponder 1 weist einen Transponderchip 2, ein piezoelektrisches Element 4, Elektroden 5, 5a, 5b, einen Induktor 21 und Verbindungselemente 20 auf. In Bezug auf die Eigenschaften und Funktionen dieser Komponenten wird auf die obigen Ausführungen verwiesen.

Der Transponder 1 gemäß Figur 6 weist zusätzlich ein Zwischenelement 25 auf. Das Zwischenelement 25 ist zwischen dem Transponderchip 2 und dem piezoelektrischen Element 4 angeordnet. Das Zwischenelement 25 kann eine Leiterplatte (PCB - printed circuit board) aufweisen. Der Transponderchip 2 ist auf einer Oberseite des Zwischenelements 25 angeordnet und befestigt, beispielsweise über ein Verbindungsmittel 6, z.B. einen Klebstoff.

Mit Hilfe des Zwischenelements 25 kann eine Auflagefläche des Transponderchips 2 und / oder der Vergussmasse 27 auf die Oberseite 4a des piezoelektrischen Elements 4 verringert werden. Mit anderen Worten, durch das Zwischenelement 25 liegen der Transponderchip 2 und/oder die Vergussmasse 27 zu einem geringeren Anteil auf der Oberseite 4a des piezoelektrischen Elements 4 bzw. auf der oberen Elektrode 5a auf. Eine Güte der Eigenresonanz im Dickenschwingungsmodus des piezoelektrischen Elements 4 reduziert sich je vollflächiger die Auflage ist. Dies ist jedoch von Nachteil für die Effizienz der Wandlung zwischen mechanischer und elektrischer Amplitude.

Das Zwischenelement 25 kann strukturiert sein. Insbesondere kann eine Unterseite des Zwischenelements 25, d.h. diejenige Oberfläche, welche dem piezoelektrischen Element 4 zugewandt ist, eine Struktur 25a aufweisen. Beispielsweise kann das Zwischenelement 25 kurze zylindrische Säulen aufweisen, die aus der ebenen Fläche (Unterseite des Zwischenelements 25)) herausragen. Alternativ dazu ist eine Struktur der Wände von Bienenwaben, d.h. Vielecke, möglich. Auf diese Weise ist es möglich, nur einen kleinen Prozentsatz der Fläche des piezoelektrischen Elements 4 mechanisch zu berühren (z.B. 10 %), während der Rest der Fläche des piezoelektrischen Elements 4 frei schwingen kann. Das piezoelektrische Element 4 wird damit im Dickenschwingen weniger beeinflusst. Ferner ist es möglich, die Beeinflussung durch geeignete Wahl des Prozentsatzes der Flächenberührung auch gezielt einzustellen und zu nutzen.

Neben der mechanischen muss es auch eine elektrische Verbindung zwischen den beiden Elektroden 5a, 5b des gepolten piezoelektrischen Elements 4 und dem Zwischenelement 25 geben. Gleiches gilt für die elektrische Anbindung zu den Verbindungselementen 20 und damit zu dem Transponderchip 2 an der Oberseite des Zwischenelements 25.

Eine Möglichkeit hierfür dazu besteht darin, für das Zwischenelement 25 eine metallisierte Oberfläche mit bestimmter Struktur vorzusehen. Beispielsweise ist es möglich, die Struktur zu sputtern und mittels einer Maske zu unterteilen, um entsprechende parallele Kontaktflächen zu schaffen. Das metallisierte Zwischenelement 25 kann dann mit dem ebenfalls metallisierten piezoelektrischen Element 4 mechanisch und elektrisch verbunden werden z.B. durch Reflow-Löten.

Alternativ dazu kann ein Formteil der so genannten 3D-Elektronik zum Einsatz kommen, d.h. ein nichtleitendes Kunststoff-Formteil, welches mittels Laserbehandlung und weiterer Prozesse Leiterbahnen und sogar innenliegende Verbindungen aufweisen kann.

Das Zwischenelement 25 kann elastisch ausgestaltet sein. Insbesondere kann das Zwischenelement 25 schwingungsdämpfende Eigenschaften aufweisen, und so - neben einem richtigen Layout als Auflagefläche für Bauteile und / oder Transponderchip 2 - auch eine Schwingungsentkopplung oder -verminderung bewirken. Bevorzugt ist das Zwischenelement 25 derart ausgebildet, dass Schwingungen insbesondere durch die akustische Welle im 13,56 MHz-bereich gut absorbiert werden. Dies kann im Zusammenspiel der Reliefform und der Materialeigenschaft erreicht werden.

Das Zwischenelement 25 kann alternativ oder zusätzlich thermisch isolierende Eigenschaften aufweisen. Damit kann es dazu beitragen den temperaturempfindlichen Transponderchip 2 mittels großer thermischer Zeitkonstante vor kurzen heißen Phasen in bestimmten Anwendungen schützen.

Auf dem Zwischenelement 25 kann ferner ein Layout zur Bestückung einer Schaltung bestehen. Der Transponderchip 2 und das Anpassnetzwerk (Induktor 21) können dort assembliert werden. Insbesondere können auf einem Layout am Zwischenelement 25 auch Sensoren an eine elektrische Schnittstelle des Transponderchips 2 angeschlossen werden, oder ein weiterer Chip mit Analog-zu-Digital Konverter Funktion. Es können auch Ausführungsformen elektrischer Kontakte (z.B. Pogo-Pins, flache Kontaktflächen die auch ringförmig angeordnet sein können, o.ä.) assembliert werden, welche später aus dem Package / der Vergussmasse 27 herausragen und elektrisch kontaktiert werden können. So ist es möglich, z.B. einen analogen Drucksensor in Form einer resistiven Brücke an die hier beschriebene Funktions-Unterbaugruppe anzubinden.

Ferner ist es möglich, um die Bauhöhe des Transponders 1 zu reduzieren, den Induktor 21 direkt auf dem piezoelektrischen Element 4, und das Zwischenelement 25 auf einer verbleibenden Fläche des piezoelektrischen Elements 4 zu bestücken (nicht explizit dargestellt).

Wie bereits in Zusammenhang mit den Figuren 4 und 5 beschrieben, kann der Transponder 1 ferner ein Schutzelement 22 in Form einer Vergussmasse 27 aufweisen. Die Vergussmasse 27 kapselt die Oberseite 1a des Transponders 1 vollständig ein. In diesem Ausführungsbeispiel weist das Schutzelement 22 ferner eine wie oben beschriebene Umrandung 28 auf. Dabei kann die Umrandung 28, in welche die Vergussmasse 27 zumindest teilweise eingefüllt ist, einstückig mit dem Zwischenelement 25 ausgebildet oder als separates Bauteil vorgesehen sein. Ist die Umrandung 28 einstückig mit dem Zwischenelement 25 ausgebildet, so weist das Zwischenelement in einem Außenbereich eine umlaufende Erhebung (Kragen) auf, welche als Umrandung 28 fungiert (siehe Figur 6).

Das Schutzelement 22 weist ferner eine wie oben beschriebene Membran 24 auf, welche die Unterseite des Transponders 1 vor externen Einflüssen schützt. In diesem Ausführungsbeispiel erstreckt sich die Membran 24 auch teilweise über die Seitenfläche 1b des Transponders 1 bzw. des Zwischenelements 25. Die Umrandung 28 kann auf der Membran 24 aufsetzen (nicht explizit dargestellt).

Ferner kann der Transponder 1 auch eine Schnittstelle 23 zum externen Anschluss des Transponders 1 aufweisen. In diesem Ausführungsbeispiel ist die Schnittstelle 23 an der Umrandung 28 ausgebildet zur Ermöglichung einer Verbindung mit einer externen Komponente.

Die Figur 7 zeigt ein weiteres Ausführungsbeispiel für einen miniaturisierten akustischen Transponder 1. Der Transponder 1 weist einen Transponderchip 2, ein piezoelektrisches Element 4, Elektroden 5, 5a, 5b, einen Induktor 21, ein Schutzelement 22 (Membran 24, Vergussmasse 27, Umrandung 28) und ein Zwischenelement 25 auf.

Im Gegensatz zu dem Transponderchip 2 gemäß der obigen Ausführungen ist der Transponderchip 2 gemäß Figur 7 nicht als Bare Die, sondern als gepackter IC ausgeführt. In Bezug auf alle anderen Eigenschaften und Funktionen der aufgeführten gemeinsamen Komponenten wird auf die obigen Ausführungen verwiesen.

In diesem Ausführungsbeispiel ist zwischen dem Transponderchip 2 und dem Zwischenelement 25 eine Leiterplatte 29 (PCB) mit Leiterbahnen angeordnet. Die Leiterplatte 29 stellt eine elektrische Verbindung zwischen den Elektroden 5, a, 5b und dem Transponderchip 2 bzw. dem Induktor 21 her. In diesem Ausführungsbeispiel können die oben beschriebenen Verbindungsmittel 20 (Wire Bonds) entfallen.

Die Beschreibung der hier angegebenen Gegenstände ist nicht auf die einzelnen speziellen Ausführungsformen beschränkt. Vielmehr können die Merkmale der einzelnen Ausführungsformen - soweit technisch sinnvoll - beliebig miteinander kombiniert werden.

### Bezugszeichenliste

- 1: Transponder
- 1a: Oberseite des Transponders
- 1b: Unterseite des Transponders
- 1c: Seitenfläche des Transponders
- 2: Transponderchip
- 3: Anschlusselement
- 4: Piezoelektrisches Element
- 4a: Oberseite
- 4b: Unterseite
- 5: Elektrode
- 5a: Obere Elektrode
- 5b: Untere Elektrode
- 6: Verbindungsmittel
- 7: Leitfähiges Material / Elektrodenmaterial
- 8: Objekt
- 8a: Oberfläche des Objekts
- 9: Ausbuchtung
- 10: Deckschicht
- h: Höhe des Transponders

- 20: Verbindungselement
- 21: Induktor
- 22: Schutzelement
- 23: Schnittstelle
- 24: Membran
- 25: Zwischenelement
- 25a: Struktur des Zwischenelements
- 26: Struktur der Elektrode
- 27: Vergussmasse
- 28: Umrandung
- 29: Leiterplatte

## Patentansprüche

1. Akustischer Transponder (1) für ein akustisches Übertragungssystem aufweisend:
- einen Transponderchip (2),
- ein piezoelektrisches Element (4) zur Umwandlung einer Trägerfrequenz in eine elektrische Spannung,
wobei der Transponder (1) eine miniaturisierte Bauform aufweist,
**dadurch gekennzeichnet dass**
der akustische Transponder (1) wenigstens ein Schutzelement (22) aufweist, das dazu ausgebildet ist den akustischen Transponder (1) vor externen Einflüssen zu schützen, wobei:
i) das wenigstens eine Schutzelement (22) eine Vergussmasse (27) aufweist, wobei die Vergussmasse (27) eine Oberseite (1a) des Transponders (1) vollständig umhüllt, und/oder
ii) das wenigstens eine Schutzelement (22) eine Umrandung (28) entlang eines Umfangs des Transponders (1) aufweist, und/oder
iii) das wenigstens eine Schutzelement (22) eine Membran (24) an einer Unterseite (1b) des Transponders (1) aufweist, wobei die Membran (24) Stahl aufweist.

2. Akustischer Transponder (1) gemäß Anspruch 1,
wobei der Transponder (1) eine Höhe (h) < 3 mm aufweist und/oder wobei der Transponder (1) einen Durchmesser < 5 mm aufweist.

3. Akustischer Transponder (1) gemäß Anspruch 1 oder 2,
wobei das piezoelektrische Element (4) eine Höhe ≤ 300 µm aufweist.

4. Akustischer Transponder (1) gemäß einem der vorangehenden Ansprüche,
wobei der Transponder (1) dazu ausgebildet ist vollständig in ein Werkstück eingebettet zu werden oder wobei der Transponder (1) dazu ausgebildet ist akustisch an einer Oberfläche eines Werkstücks angebunden zu werden.

5. Akustischer Transponder (1) gemäß Anspruch 4,
wobei das Werkstück ein metallisches Bauteil und/oder ein 3D Druckteil ist.

6. Akustischer Transponder (1) gemäß einem der vorangehenden Ansprüche,
wobei die Höhe des piezoelektrischen Materials derart eingestellt ist, dass sich eine Dickenresonanz im Bereich von 9 MHz bis 14 MHz ausbildet.

7. Akustischer Transponder (1) gemäß einem der vorangehenden Ansprüche,
ferner aufweisend wenigstens zwei Elektroden (5), wobei die Elektroden (5) wenigstens an einer Unterseite (4b) und an einer Oberseite (4a) des piezoelektrischen Elements (4) ausgebildet sind.

8. Akustischer Transponder (1) gemäß Anspruch 7,
wobei die Elektroden (5) zumindest teilweise elastisch ausgebildet sind.

9. Akustischer Transponder (1) gemäß Anspruch 7 oder 8,
wobei die Elektrode (5) an der Oberseite (4a) des piezoelektrischen Elements (4) strukturiert ausgebildet ist.

10. Akustischer Transponder (1) gemäß einem der vorangehenden Ansprüche und/oder gemäß Anspruch 7,
wobei eine elektrische Impedanz zwischen dem piezoelektrischen Element (4) und dem Transponderchip (2) durch eine Bauform des piezoelektrischen Elements (4) und/oder der Elektroden (5) eingestellt ist.

11. Akustischer Transponder (1) gemäß einem der vorangehenden Ansprüche,
ferner aufweisend wenigstes ein Element zur elektrischen Impedanzanpassung.

12. Akustischer Transponder (1) gemäß Anspruch 11,
wobei der Transponder (1) einen Induktor (21) zur Einstellung der Impedanz aufweist, und wobei der Induktor (21) parallel zu einer Kapazität des piezoelektrischen Elements (4) geschaltet ist.

13. Akustischer Transponder (1) gemäß Anspruch 12,
wobei der Induktor (21) als SMD Bauteil ausgebildet ist und
wobei der Induktor (21) mittels Reflow-Löten oder durch leitfähiges Kleben elektrisch mit dem piezoelektrischen Element (4) verbunden ist.

14. Akustischer Transponder (1) gemäß einem der vorangehenden Ansprüche,
wobei der Transponderchip (1) ein NFC Chip ist.

15. Akustischer Transponder (1) gemäß einem der vorangehenden Ansprüche,
ferner aufweisend wenigstens einen MEMS-Sensor.

16. Akustischer Transponder (1) gemäß einem der vorangehenden Ansprüche,
ferner aufweisend eine Identifikationsnummer zur sicheren Authentifizierung.

17. Akustischer Transponder (1) gemäß einem der vorangehenden Ansprüche,
wobei die Miniaturisierung des akustischen Transponders (1) zu einer Positionsbestimmung und zugleich mit Identifikation und/oder Authentifizierung genutzt werden kann.

18. Akustischer Transponder (1) gemäß einem der vorangehenden Ansprüche,
wobei das piezoelektrische Element (4) aus bleifreiem Material besteht.

19. Akustischer Transponder (1) gemäß einem der vorangehenden Ansprüche,
wobei ein Volumen in einem Innenbereich der Umrandung (28) mit einer Vergussmasse (27) aufgefüllt ist.

20. Akustischer Transponder (1) gemäß einem der vorangehenden Ansprüche,
wobei die Umrandung (28) magnetisch ausgebildet ist und/oder wobei die Membran (24) magnetisch ausgebildet ist.

21. Akustischer Transponder (1) gemäß einem der vorangehenden Ansprüche,
ferner aufweisend ein Zwischenelement (25), wobei das Zwischenelement (25) zwischen dem piezoelektrischen Element (4) und dem Transponderchip (2) ausgebildet ist.

22. Akustischer Transponder (1) gemäß Anspruch 21,
wobei das Zwischenelement (25) eine metallisierte Oberfläche aufweist zur Herstellung einer elektrischen Verbindung mit dem piezoelektrischen Element (4) und/oder dem Transponderchip (2).

23. Akustischer Transponder (1) gemäß Anspruch 22,
wobei die metallisierte Oberfläche des Zwischenelements (25) zumindest teilweise strukturiert ist.

24. Akustischer Transponder (1) gemäß einem der Ansprüche 21 bis 23,
wobei eine dem piezoelektrischen Element (4) zugewandte Unterseite des Zwischenelements (25) eine Struktur (25a) aufweist zur Bereitstellung einer Mehrzahl von parallelen, elektrischen Kontakten und/oder zur Minimierung einer Kontaktfläche zwischen dem Zwischenelement (25) und dem piezoelektrischen Element (4).

25. Akustischer Transponder (1) gemäß Anspruch 21,
wobei das Zwischenelement (25) ein Formteil aufweist und wobei das Formteil Leiterbahnen aufweist.

26. Akustischer Transponder (1) gemäß einem der Ansprüche 21 bis 25,
wobei ein Material und/oder eine Struktur des Zwischenelements (25) zur Schwingungsentkopplung oder -dämpfung ausgebildet ist.

27. Akustischer Transponder (1) gemäß einem der Ansprüche 21 bis 26,
wobei das Zwischenelement (25) thermisch isolierend ausgebildet ist.

28. Akustischer Transponder gemäß einem der Ansprüche 1 bis 5,
wobei zwischen dem Transponderchip (2) und dem piezoelektrischen Element (4) eine Leiterplatte (29) angeordnet ist zur elektrischen Verbindung zwischen Transponderchip (2) und piezoelektrischem Element.

29. Verwendung eines miniaturisierten akustischen Transponders (1) gemäß einem der vorangehenden Ansprüche in einem Objekt (8), wobei der Transponder (1) vollständig in dem Objekt (8) eingebettet ist und wobei der Transponder (1) während der Lebensdauer des Objekts (8) in dem Objekt (8) verbleibt zur Gewinnung von Messdaten aus einem Inneren des Objekts (8) und/oder zur Identifizierung des Objekts (8) und/oder zur Steuerung des Objekts (8)
oder
Verwendung eines miniaturisierten akustischen Transponders (1) gemäß einem der vorangehenden Ansprüche an einer Oberfläche eines metallischen Objekts (8), wobei der Transponder (1) zur Identifizierung des Objekts (8) und/oder zur Gewinnung von Messdaten und/oder zur Steuerung des Objekts (8) mit der Oberfläche des Objekts (8) gekoppelt ist.

30. Verwendung nach Anspruch 29,
wobei der miniaturisierte akustische Transponder (1) in der Funktion mit sicherer Authentifizierung als Eingabeelement genutzt werden kann.

31. Akustisches Übertragungssystem aufweisend
A) auf einer Primärseite:
- eine Sendeeinheit, die dafür vorgesehen und geeignet ist, ein Sendesignal bereitzustellen,
- eine Empfangseinheit, die dafür vorgesehen und geeignet ist, ein Empfangssignal als Antwort auf das Sendesignal zu empfangen,
- einen elektroakustischen Wandler, der dafür vorgesehen und geeignet ist, das Sendesignal in ein akustisches Signal und ein akustisches Signal in ein Empfangssignal zu wandeln,
B) auf einer Sekundärseite:
- einen miniaturisierten Transponder (1) nach einem der Ansprüche 1 bis 28, wobei der Transponder (1) dazu vorgesehen ist, ein Empfangssignal zu empfangen und ein Sendesignal zu senden,
C) zwischen der Primärseite und der Sekundärseite ein akustisches Koppelmedium.

32. Akustisches Übertragungssystem nach Anspruch 31,
wobei der Transponder (1) dazu ausgebildet und angeordnet ist, den Takt der Empfangseinheit als Systemtakt zu verwenden.

33. Akustisches Übertragungssystem nach Anspruch 31 oder 32, wobei die Empfangseinheit dazu ausgebildet ist mehrere piezoelektrische Elemente (4) anzusteuern und/oder ein piezoelektrisches Element (4) anzusteuern, welches größer als jenes des Transponders (1) ist, und dadurch den Erfassungsbereich zu vergrößern und/oder mehrere akustische Transponder (1) anzusprechen.

34. Verfahren zur Herstellung eines miniaturisierten Transponders (1) gemäß einem der Ansprüche 1 bis 28 für ein akustisches Übertragungssystem aufweisend die folgenden Schritte:
A) Bereitstellen einer Vielzahl von Transponderchips (2) aufweisend eine Vielzahl integrierter Schaltkreise auf einem Wafer;
B) Bereitstellen einer Vielzahl von piezoelektrischen Elementen (4), wobei jeweils eine Elektrode (5) wenigstens auf einer Unterseite (4b) und einer Oberseite (4a) des jeweiligen piezoelektrischen Elements (4) ausgebildet ist;
C) Bereitstellen eines Verbindungsmittels (6);
D) Elektrische und mechanische Verbindung von Transponderchips (2) und piezoelektrischen Elementen (4) mit Hilfe des Verbindungsmittels (6);
E) Separation in Einzelbauteile zur Herstellung einer Vielzahl von miniaturisierten Transpondern (1).

35. Verfahren nach Anspruch 34,
wobei das jeweilige piezoelektrische Element (4) und der jeweilige Transponderchip (2) mittels Flip-Chip Montage miteinander verbunden werden.

36. Verfahren nach Anspruch 34 oder 35,
ferner aufweisend den Schritt;
Aufbringen einer Passivierung, wobei die Passivierung vor der Separation in Einzelbauteile aufgebracht wird.

## Claims

1. Acoustic transponder (1) for an acoustic transmission system comprising:
- a transponder chip (2),
- a piezoelectric element (4) for converting a carrier frequency into an electrical voltage,
wherein the transponder (1) has a miniaturized design,
**characterized in that**
the acoustic transponder (1) comprises at least one protection element (22) designed to protect the acoustic transponder (1) against external influences, wherein:
i) the at least one protection element (22) comprises a potting compound (27), wherein the potting compound (27) completely encapsulates a top side (1a) of the transponder (1),
and/or
ii) the at least one protection element (22) comprises a border (28) along a perimeter of the transponder (1),
and/or
iii) the at least one protection element (22) comprises a membrane (24) at a bottom side (1b) of the transponder (1), wherein the membrane (24) comprises steel.

2. Acoustic transponder (1) according to claim 1,
wherein the transponder (1) has a height (h) < 3 mm and/or wherein the transponder (1) has a diameter < 5 mm.

3. Acoustic transponder (1) according to claim 1 or 2,
wherein the piezoelectric element (4) has a height ≤ 300 µm.

4. Acoustic transponder (1) according to any one of the preceding claims,
wherein the transponder (1) is configured to be completely embedded in a workpiece or wherein the transponder (1) is designed to be acoustically linked to a surface of a workpiece.

5. Acoustic transponder (1) according to claim 4,
wherein the workpiece is a metallic component and/or a 3D printed part.

6. Acoustic transponder (1) according to any one of the preceding claims,
wherein the height of the piezoelectric material is adjusted in such a way that a thickness resonance forms in the range of 9 MHz to 14 MHz.

7. Acoustic transponder (1) according to any one of the preceding claims,
furthermore comprising at least two electrodes (5), wherein the electrodes (5) are formed at least at a bottom side (4b) and at a top side (4a) of the piezoelectric element (4).

8. Acoustic transponder (1) according to claim 7,
wherein the electrodes (5) are formed at least partially elastic.

9. Acoustic transponder (1) according to claim 7 or 8,
wherein the electrode (5) at the top side (4a) of the piezoelectric element (4) is formed in a structured manner.

10. Acoustic transponder (1) according to any one of the preceding claims and/or according to claim 7,
wherein an electrical impedance between the piezoelectric element (4) and the transponder chip (2) is set by a design of the piezoelectric element (4) and/or of the electrodes (5).

11. Acoustic transponder (1) according to any one of the preceding claims,
furthermore comprising at least one element for electrical impedance matching.

12. Acoustic transponder (1) according to claim 11,
wherein the transponder (1) comprises an inductor (21) for setting the impedance, and wherein the inductor (21) is connected in parallel with a capacitance of the piezoelectric element (4).

13. Acoustic transponder (1) according to claim 12,
wherein the inductor (21) is configured as an SMD component and wherein the inductor (21) is electrically connected to the piezoelectric element (4) by means of reflow soldering or by conductive adhesive bonding.

14. Acoustic transponder (1) according to any one of the preceding claims,
wherein the transponder chip (1) is an NFC chip.

15. Acoustic transponder (1) according to any one of the preceding claims,
further comprising at least one MEMS sensor.

16. Acoustic transponder (1) according to any one of the preceding claims,
furthermore comprising an identification number for secure authentication.

17. Acoustic transponder (1) according to any one of the preceding claims,
wherein the miniaturization of the acoustic transponder (1) can be used for position determination and at the same time with identification and/or authentication.

18. Acoustic transponder (1) according to any one of the preceding claims,
wherein the piezoelectric element (4) consists of lead-free material.

19. Acoustic transponder (1) according to any one of the preceding claims,
wherein a volume in an inner region of the border (28) is filled with a potting compound (27).

20. Acoustic transponder (1) according to any one of the preceding claims,
wherein the border (28) is magnetic and/or wherein the membrane (24) is magnetic.

21. Acoustic transponder (1) according to any one of the preceding claims,
furthermore comprising an intermediate element (25), wherein the intermediate element (25) is formed between the piezoelectric element (4) and the transponder chip (2) .

22. Acoustic transponder (1) according to claim 21,
wherein the intermediate element (25) has a metallized surface for establishing an electrical connection with the piezoelectric element (4) and/or the transponder chip (2) .

23. Acoustic transponder (1) according to claim 22,
wherein the metallized surface of the intermediate element (25) is at least partly structured.

24. Acoustic transponder (1) according to any one of claims 21 to 23,
wherein an bottom side of the intermediate element (25) facing the piezoelectric element (4) has a structure (25a) for providing a plurality of parallel electrical contacts and/or for minimizing a contact surface between the intermediate element (25) and the piezoelectric element (4).

25. Acoustic transponder (1) according to claim 21,
wherein the intermediate element (25) comprises a moulded component and wherein the moulded component comprises conductive tracks.

26. Acoustic transponder (1) according to any one of claims 21 to 25,
wherein a material and/or a structure of the intermediate element (25) are/is configured for vibration decoupling or damping.

27. Acoustic transponder (1) according to any one of claims 21 to 26,
wherein the intermediate element (25) is adapted to be thermally insulating.

28. Acoustic transponder (1) according to any one of claims 1 to 5,
wherein a printed circuit board (29) is arranged between the transponder chip (2) and the piezoelectric element (4) for electrical connection between the transponder chip (2) and the piezoelectric element.

29. Use of a miniaturized acoustic transponder (1) according to any one of the preceding claims in an object (8), wherein the transponder (1) is completely embedded in the object (8) and wherein the transponder (1) remains in the object (8) during the lifetime of the object (8) for obtaining measurement data from an interior of the object (8) and/or for identifying the object (8) and/or for controlling the object (8),
or
use of a miniaturized acoustic transponder (1) according to any of one the preceding claims at a surface of a metallic object (8), wherein the transponder (1) is coupled to the surface of the object (8) for identifying the object (8) and/or for obtaining measurement data and/or for controlling the object (8).

30. Use according to claim 29,
wherein the miniaturized acoustic transponder (1) can be used as an input element in the function with secure authentication.

31. Acoustic transmission system comprising
A) on a primary side:
- a transmitting unit intended and adapted to provide a transmitting signal,
- a receiving unit intended and adapted to receive a receiving signal as a response to the transmitting signal,
- an electroacoustic transducer intended and adapted for converting the transmitting signal into an acoustic signal and an acoustic signal into a receiving signal,
B) on a secondary side:
- a miniaturized transponder (1) according to any one of claims 1 to 28, wherein the transponder (1) is intended to receive a receiving signal and to transmit a transmitting signal,
C) an acoustic coupling medium between the primary side and the secondary side.

32. Acoustic transmission system according to claim 31, wherein the transponder (1) is adapted and arranged for using the clock of the receiving unit as system clock.

33. Acoustic transmission system according to claim 31 or 32,
wherein the receiving unit is configured to drive a plurality of piezoelectric elements (4) and/or to drive a piezoelectric element (4) which is larger than that of the transponder (1), and thereby to enlarge the detection range and/or to address a plurality of acoustic transponders (1).

34. Method for producing a miniaturized transponder (1) according to any one of claims 1 to 28 for an acoustic transmission system, comprising the following steps:
A) providing a plurality of transponder chips (2) comprising a plurality of integrated circuits on a wafer;
B) providing a plurality of piezoelectric elements (4), wherein one respective electrode (5) is formed on at least a bottom side (4b) and a top side (4a) of the respective piezoelectric element (4);
C) providing a connecting means (6);
D) electrical and mechanical connection of transponder chips (2) and piezoelectric elements (4) by means of the connecting means (6);
E) separation into individual components for producing a plurality of miniaturized transponders (1).

35. Method according to claim 34,
wherein the respective piezoelectric element (4) and the respective transponder chip (2) are connected to one another by means of flip-chip mounting.

36. Method according to claim 34 or 35,
further comprising the step of:
applying a passivation, wherein the passivation is applied before separation into individual components.

## Revendications

1. Transpondeur acoustique (1) destiné à un système de transmission acoustique, ledit transpondeur comportant :
- une puce de transpondeur (2),
- un élément piézoélectrique (4) destiné à convertir une fréquence porteuse en une tension électrique,
le transpondeur (1) présentant une forme de construction miniaturisée,
**caractérisé en ce que**
le transpondeur acoustique (1) comporte au moins un élément de protection (22) qui est conçu pour protéger le transpondeur acoustique (1) contre des influences extérieures :
i) l'au moins un élément de protection (22) comportant une matière d'enrobage (27), la matière d'enrobage (27) recouvrant complètement un côté supérieur (1a) du transpondeur (1),
et/ou
ii) l'au moins un élément de protection (22) comportant une bordure (28) le long d'une circonférence du transpondeur (1),
et/ou
iii) l'au moins un élément de protection (22) comportant une membrane (24) sur un côté inférieur (1b) du transpondeur (1), la membrane (24) étant en acier.

2. Transpondeur acoustique (1) selon la revendication 1, le transpondeur (1) ayant une hauteur (h) < 3 mm et/ou le transpondeur (1) ayant un diamètre < 5 mm.

3. Transpondeur acoustique (1) selon la revendication 1 ou 2, l'élément piézoélectrique (4) ayant une hauteur ≤ 300 um.

4. Transpondeur acoustique (1) selon l'une des revendications précédentes,
le transpondeur (1) étant conçu pour être entièrement intégré dans une pièce ou le transpondeur (1) étant conçu pour être relié acoustiquement à une surface d'une pièce.

5. Transpondeur acoustique (1) selon la revendication 4,
la pièce étant un composant métallique et/ou une pièce imprimée en 3D.

6. Transpondeur acoustique (1) selon l'une des revendications précédentes,
la hauteur de la matière piézoélectrique étant réglée de telle sorte qu'une résonance d'épaisseur soit formée dans la plage de 9 MHz à 14 MHz.

7. Transpondeur acoustique (1) selon l'une des revendications précédentes,
comportant en outre au moins deux électrodes (5), les électrodes (5) étant formées au moins sur un côté inférieur (4b) et sur un côté supérieur (4a) de l'élément piézoélectrique (4).

8. Transpondeur acoustique (1) selon la revendication 7,
les électrodes (5) étant au moins partiellement élastiques.

9. Transpondeur acoustique (1) selon la revendication 7 ou 8,
l'électrode (5) étant conçue pour être structurée sur le côté supérieur (4a) de l'élément piézoélectrique (4) .

10. Transpondeur acoustique (1) selon l'une des revendications précédentes et/ou selon la revendication 7,
l'impédance électrique entre l'élément piézoélectrique (4) et la puce de transpondeur (2) étant réglée par la forme de construction de l'élément piézoélectrique (4) et/ou des électrodes (5).

11. Transpondeur acoustique (1) selon l'une des revendications précédentes,
comportant en outre au moins un élément d'adaptation d'impédance électrique.

12. Transpondeur acoustique (1) selon la revendication 11,
le transpondeur (1) comportant une inductance (21) destinée à régler l'impédance, et l'inductance (21) étant montée en parallèle à une capacité de l'élément piézoélectrique (4).

13. Transpondeur acoustique (1) selon la revendication 12,
l'inductance (21) étant réalisée sous la forme d'un composant CMS et l'inductance (21) étant reliée électriquement à l'élément piézoélectrique (4) par brasage par refusion ou par collage conducteur.

14. Transpondeur acoustique (1) selon l'une des revendications précédentes,
la puce de transpondeur (1) étant une puce NFC.

15. Transpondeur acoustique (1) selon l'une des revendications précédentes,
comportant en outre au moins un capteur MEMS.

16. Transpondeur acoustique (1) selon l'une des revendications précédentes,
comportant en outre un numéro d'identification destiné à une authentification sécurisée.

17. Transpondeur acoustique (1) selon l'une des revendications précédentes,
la miniaturisation du transpondeur acoustique (1) pouvant être utilisée pour déterminer une position et en même temps avec une identification et/ou une authentification.

18. Transpondeur acoustique (1) selon l'une des revendications précédentes,
l'élément piézoélectrique (4) étant en une matière sans plomb.

19. Transpondeur acoustique (1) selon l'une des revendications précédentes,
un volume dans une zone intérieure de la bordure (28) étant rempli d'une matière d'enrobage (27).

20. Transpondeur acoustique (1) selon l'une des revendications précédentes,
la bordure (28) étant magnétique et/ou
la membrane (24) étant magnétique.

21. Transpondeur acoustique (1) selon l'une des revendications précédentes,
comportant en outre un élément intermédiaire (25), l'élément intermédiaire (25) étant formé entre l'élément piézoélectrique (4) et la puce de transpondeur (2).

22. Transpondeur acoustique (1) selon la revendication 21,
l'élément intermédiaire (25) comportant une surface métallisée destinée à établir une liaison électrique avec l'élément piézoélectrique (4) et/ou la puce de transpondeur (2).

23. Transpondeur acoustique (1) selon la revendication 22,
la surface métallisée de l'élément intermédiaire (25) étant au moins partiellement structurée.

24. Transpondeur acoustique (1) selon l'une des revendications 21 à 23,
un côté inférieur de l'élément intermédiaire (25) qui est dirigé vers l'élément piézoélectrique (4) comportant une structure (25a) destinée à fournir une pluralité de contacts électriques parallèles et/ou à minimiser une zone de contact entre l'élément intermédiaire (25) et l'élément piézoélectrique (4).

25. Transpondeur acoustique (1) selon la revendication 21,
l'élément intermédiaire (25) comportant une partie moulée et la partie moulée comportant des pistes conductrices.

26. Transpondeur acoustique (1) selon l'une des revendications 21 à 25,
une matière et/ou une structure de l'élément intermédiaire (25) étant conçue pour le découplage ou l'amortissement de vibrations.

27. Transpondeur acoustique (1) selon l'une des revendications 21 à 26,
l'élément intermédiaire (25) étant conçu pour être thermiquement isolant.

28. Transpondeur acoustique selon l'une des revendications 1 à 5,
une carte de circuit imprimé (29) étant disposée entre la puce de transpondeur (2) et l'élément piézoélectrique (4) afin d'établir une liaison électrique entre la puce de transpondeur (2) et l'élément piézoélectrique.

29. Utilisation d'un transpondeur acoustique miniaturisé (1) selon l'une des revendications précédentes dans un objet (8), le transpondeur (1) étant complètement intégré dans l'objet (8) et le transpondeur (1) restant dans l'objet (8) pendant la durée de vie de l'objet (8) afin d'obtenir des données de mesure depuis l'intérieur de l'objet (8) et/ou d'identifier l'objet (8) et/ou de commander l'objet (8)
ou
Utilisation d'un transpondeur acoustique miniaturisé (1) selon l'une des revendications précédentes sur une surface d'un objet métallique (8), le transpondeur (1) étant couplé à la surface de l'objet (8) afin d'identifier l'objet (8) et/ou d'obtenir des données de mesure et/ou de commander l'objet (8).

30. Utilisation selon la revendication 29,
le transpondeur acoustique miniaturisé (1) pouvant être utilisé comme élément d'entrée dans la fonction à authentification sécurisée.

31. Système de transmission acoustique comportant
A) d'un côté primaire :
- une unité d'émission prévue et adaptée pour fournir un signal d'émission,
- une unité de réception prévue et adaptée pour recevoir un signal de réception en réponse au signal d'émission,
- un transducteur électroacoustique prévu et adapté pour convertir le signal d'émission en signal acoustique et un signal acoustique en signal de réception,
B) d'un côté secondaire :
- un transpondeur miniaturisé (1) selon l'une des revendications 1 à 28, le transpondeur (1) étant prévu pour recevoir un signal de réception et émettre un signal d'émission,
C) un milieu de couplage acoustique entre le côté primaire et le côté secondaire.

32. Système de transmission acoustique selon la revendication 31,
le transpondeur (1) étant conçu et disposé de manière à utiliser l'horloge de l'unité de réception comme horloge de système.

33. Système de transmission acoustique selon la revendication 31 ou 32,
l'unité de réception étant conçue pour commander plusieurs éléments piézoélectriques (4) et/ou pour commander un élément piézoélectrique (4) plus grand que celui du transpondeur (1), et ainsi agrandir la zone de détection et/ou déclencher plusieurs transpondeurs acoustiques (1).

34. Procédé de fabrication d'un transpondeur miniaturisé (1) selon l'une des revendications 1 à 28 destiné à un système de transmission acoustique, ledit procédé comportant les étapes suivantes :
A) fournir un grand nombre de puces de transpondeur (2) qui comportent un grand nombre de circuits intégrés sur une plaquette de semi-conducteur ;
B) fournir un grand nombre d'éléments piézoélectriques (4), une électrode (5) étant formée au moins sur un côté inférieur (4b) et un côté supérieur (4a) de l'élément piézoélectrique respectif (4) ;
C) fournir un moyen de liaison (6) ;
D) relier électriquement et mécaniquement des puces de transpondeur (2) et des éléments piézoélectriques (4) à l'aide du moyen de liaison (6) ;
E) séparer en composants individuels afin de produire un grand nombre de transpondeurs miniaturisés (1).

35. Procédé selon la revendication 34,
l'élément piézoélectrique respectif (4) et la puce de transpondeur respective (2) étant reliés l'un à l'autre à l'aide d'un montage flip-flop.

36. Procédé selon la revendication 34 ou 35,
comportant en outre l'étape suivante ;
appliquer une passivation, la passivation étant appliquée avant la séparation en composants individuels.
